# EUROPÄISCHE PATENTSCHRIFT

(11) **EP 2 347 173 B1**
(45) Veröffentlichungstag und Bekanntmachung des Hinweises auf die Patenterteilung: **02.08.2017**
(21) Anmeldenummer: 09763822.5
(22) Anmeldetag: 02.11.2009
(51) Int. Cl.: F21V 8/00, G02B 6/00, F21V 13/04

(54) **BELEUCHTUNGSEINRICHTUNG MIT REDUZIERTER BLENDWIRKUNG**
LIGHTING DEVICE HAVING REDUCED GLARE
DISPOSITIF D'ÉCLAIRAGE PERMETTANT D'OBTENIR UN ÉBLOUISSEMENT RÉDUIT

(30) Priorität: 04.11.2008 AT 17172008
(43) Veröffentlichungstag der Anmeldung: 27.07.2011
(73) Patentinhaber: Günther Conzatti, 6176 Völs (AT)
(72) Erfinder: CONZATTI, Günther, A-6176 Völs (AT); WEINGÄRTNER, Harald, A-6432 Sautens (AT); SWAROVSKI, Paul, A-6071 Aldrans (AT)
(74) Vertreter: Patentship Patentanwaltsgesellschaft mbH
(86) Internationale Anmeldenummer: PCT/AT2009/000423
(87) Internationale Veröffentlichungsnummer: WO 2010/051571

(56) Entgegenhaltungen:
- EP-A1- 1 850 064
- EP-A2- 1 033 526
- WO-A2-2005/107363
- DE-A1- 2 447 832
- DE-A1- 10 335 683
- US-A1- 2006 126 341

## Beschreibung

Die Erfindung betrifft eine Beleuchtungseinrichtung mit mindestens einer Lichtquelle und einer Lichtaustrittsfläche, wobei die in Betrieb befindliche Beleuchtungseinrichtung eine Lichtstärkeverteilung und eine Leuchtdichteverteilung aufweist, wobei bei Messung in einem sphärischen Koordinatensystem, welches einen Polarwinkel und einen Azimutwinkel aufweist, ein Maximum der Lichtstärkeverteilung auf einer durch den Polarwinkel von 0° und den Azimutwinkel von 0° gedachten Hauptgeraden durch ein Zentrum der Lichtaustrittsfläche angeordnet ist, und wobei eine vom Maximum der Lichtstärkeverteilung ausgehende Richtung des geringsten Rückgangs der Lichtstärke in einer durch den Polarwinkel von 0° gedachten Hauptebene angeordnet ist.

Zur Ausgestaltung und Charakterisierung von Beleuchtungseinrichtungen mit Lichtquellen, beispielsweise Bühnenscheinwerfern, wird als lichttechnische Grundgröße die Lichtstärke I die in Einheiten von Candela (cd) angegeben wird oder die Beleuchtungsstärke E, die in Einheiten von Lux (Ix) angegeben wird, verwendet. Dabei ist die Lichtstärke I ein Maß dafür, wie stark die Lichtquelle leuchtet, indem diese angibt, wie viel Lichtenergie im sichtbaren Spektralbereich pro Zeit von der Lichtquelle in einen gewissen Raumwinkelbereich abgestrahlt wird. Die Beleuchtungsstärke E hingegen ist eine Größe zur Beurteilung der Lichtverhältnisse an einem bestimmten beleuchteten Ort, indem diese mittels des Quotienten aus Lichtstrom, also Strahlungsleistung der Lichtquelle im sichtbaren Spektralbereich, und der betragsmäßigen Empfängeroberfläche beschreibt, wie viel Lichtstrom auf eine bestimmte Fläche trifft. Dabei wird bei diesen lichttechnischen Größen jeweils die spektrale Hellempfindlichkeitskurve des menschlichen Auges berücksichtigt.

Es hat sich allerdings herausgestellt, dass zur Beurteilung ob eine vorgegebene Beleuchtungseinrichtung für einen Beobachter, der entgegen der Ausbreitungsrichtung der von einer Beleuchtungseinrichtung ausgestrahlten Lichtstrahlung blickt, eine Blendung hervorruft, die oben erwähnten lichttechnischen Größen wenig geeignet sind.

Eine zur Blendbewertung einer Beleuchtungseinrichtung, beispielsweise eines Scheinwerfers, besser geeignete Größe ist die Leuchtdichte, die in Candela pro Quadratmeter (cd/m²) angegeben wird, und die den Helligkeitseindruck, den eine beleuchtete oder leuchtende Fläche dem Auge vermittelt, wobei die physiologische Wirkung des Lichtes auf das Auge mittels der spektralen Hellempfindlichkeitskurve berücksichtigt wird. Die Leuchtdichte L ist somit ein Maß für die Helligkeitswirkung einer Lichtquelle auf das menschliche Auge und wird gegeben durch den Quotienten aus der Lichtstärke I einer Lichtquelle und der leuchtenden betragsmäßigen Fläche A der Lichtquelle. Entsprechendes gilt für eine beleuchtete Fläche, die dabei selbst als Lichtquelle angesehen werden kann. Mit der Leuchtdichte wird angegeben, wie viel sichtbares Licht, d.h. wieviel Lichtstrom, von einer bestimmten Oberfläche aus in einer bestimmten Richtung ausgestrahlt wird. Dabei wird die Richtung durch die Flächennormale berücksichtigt, und die Leuchtdichte ergibt sich zu L=I/(Acos ϑ), wobei ϑ den Winkel zwischen der jeweiligen Richtung und der Flächennormalen bezeichnet. Für gekrümmte oder ungleichmäßige Flächen gilt diese Beziehung nur lokal. Dabei hängt die Leuchtdichte, ebenso wie die Lichtstärke, nicht direkt vom Abstand zur Lichtquelle ab.

Herkömmliche Beleuchtungseinrichtungen wie DE2447832 oder US2005/107363 weisen nun, insbesondere wenn sie konstruiert worden sind, um eine vorgegebene Lichtstärkeverteilung oder eine gewisse Beleuchtungsstärke in einer gewissen Entfernung zu erreichen, keine ausgeprägte Hell-/Dunkelgrenze hinsichtlich ihrer Leuchtdichteverteilung auf, d.h. die Leuchtdichteverteilung weist keine Grenze auf, die durch einen massiven Rückgang der Leuchtdichte gekennzeichnet ist. Misst man beispielsweise bei einem herkömmlichen Fahrzeugscheinwerfer in einer gewissen Vertikalebene, wobei die Ebene beispielsweise in Richtung des Maximums der Lichtstärkeverteilung des Scheinwerfers oder in Richtung der Längsachse des Fahrzeugs weist, die Leuchtdichteverteilung, so ergibt sich zumeist in Horizontalrichtung oder knapp unterhalb der Horizontalrichtung ein Maximum der Lichtstärkeverteilung. In dieser Vertikalebene nimmt nun die Leuchtdichte oberhalb und unterhalb des Lichtstärkemaximums nur langsam ab, es gibt also keine ausgeprägte Hell-/Dunkelgrenze, wodurch auch im Blickfeld entgegenkommender Verkehrsteilnehmer hohe Werte der Leuchtdichte auftreten können, die eine massive Blendung zur Folge haben.

Der Erfindung liegt die Aufgabe zugrunde eine Beleuchtungseinrichtung anzugeben, die eine Beleuchtung mit einer Leuchtdichteverteilung mit ausgeprägter Hell-/Dunkelgrenze ermöglicht und dadurch die oben erwähnten Nachteile hinsichtlich der Blendung von Beobachtern, die in Richtung der Beleuchtungseinheit blicken, vermeidet.

Diese Aufgabe wird durch eine Beleuchtungseinrichtung mit den Merkmalen des Anspruchs 1 gelöst.

Die erfindungsgemäße Beleuchtungseinrichtung, beispielsweise ein Bühnenscheinwerfer, eine Straßenbeleuchtung oder eine Beleuchtungseinrichtung für eine Innen- oder Außenwand oder für öffentliche Plätze oder ein Fahrzeugscheinwerfer, verfügt über mindestens eine Lichtquelle und eine Lichtaustrittsfläche, von der aus Licht abgestrahlt wird und auf dessen Flächeninhalt sich die Leuchtdichte als Lichtstärke gebrochen durch den Flächeninhalt der leuchtende Fläche unter Berücksichtigung der jeweiligen Richtung bezieht. Die Lichtquelle(n) kann oder können dabei beispielsweise von einer oder mehreren Leuchtdioden gebildet werden, es kann aber auch vorgesehen sein, Lichtquelle(n) zu verwenden, die inkohärente Strahlung abstrahlen.

Um die Leuchtdichteverteilung zu messen, wird ein Leuchtdichtemessgerät verwendet, welches bereits seit längerem im Fachhandel erhältlich ist. Ein derartiges Leuchtdichtemessgerät ist beispielsweise das Konica Minolta Leuchtdichtemessgerät CS-200, das eine Messöffnung von 1/10° aufweist. Zu diesem Zweck wird in einer gegebenen Entfernung von der Lichtaustrittsfläche ein derartiges Leuchtdichtemessgerät installiert, wodurch durch Variation der relativen Anordnung der Messöffnung des Leuchtdichtemessgeräts eine räumliche Leuchtdichteverteilung gemessen und dargestellt werden kann. Bei jeder Messung wird dabei ein Winkelbereich entsprechend der Messöffnung erfasst. Misst man beispielsweise die Leuchtdichteverteilung eines Fahrzeugscheinwerfers, variiert man die Höhe und die seitliche Anordnung der Messöffnung bezüglich des Fahrzeugscheinwerfers und erfasst somit durch eine Vielzahl von Messungen einen gewissen Raumwinkelbereich. Eine analoge Messung ist für die Lichtstärkeverteilung notwendig, wobei es dafür ebenso Messgeräte im Fachhandel gibt, beispielsweise sogenannte Fotogoniometer.

Bei einer Messung der Leuchtdichteverteilung der erfindungsgemäßen Beleuchtungseinrichtung wird diese nun mittels eines gedachten sphärischen Koordinatensystems beschrieben, dessen Ursprung sich in einem Zentrum der Lichtaustrittsfläche befindet, von dem aus die jeweilige Richtung und die in dieser Richtung vorgefundene Leuchtdichte und Lichtstärkeverteilung angegeben wird. Da die Leuchtdichte ebenso wie die Lichtstärke nicht vom Abstand zur Lichtaustrittsfläche sondern nur von der Richtung von der aus die Lichtaustrittsfläche betrachtet wird und vom zugehörigen Raumwinkelbereich abhängt, ist jeweils nur die Richtung (und nicht der radiale Abstand) zu dem Zentrum der Lichtaustrittsfläche relevant und es werden vorzugsweise Kugelkoordinaten verwendet. Eine Beschreibung in einem kartesischen oder einem anderen Koordinatensystem ist natürlich prinzipiell ebenso möglich, wobei die Messresultate durch gewöhnliche Koordinatentransformation ineinander übergeführt werden können.

Ausgehend vom Ursprung dieses gedachten Koordinatensystems, also vom Zentrum der Lichtaustrittsfläche, wobei es sich bei diesem Zentrum beispielsweise um den geometrischen Mittelpunkt der Lichtaustrittsfläche handeln kann, gibt es nun eine Richtung in der ein maximaler Wert der Lichtstärke vorgefunden wird, und welche dadurch eine Hauptgerade durch das Zentrum der Lichtaustrittsfläche bei einem Polarwinkel von 0° und einem Azimutwinkel von 0° definiert. Bei einem kartesischen Koordinatensystem könnte man diese Gerade durch den Ursprung in Richtung des Maximums der Lichtstärke als x-Achse definieren. Ausgehend von diesem Maximum gibt es eine Richtung, in die die Lichtstärke am wenigsten abnimmt. Mit anderen Worten: Zunächst wird die Richtung des Maximums der Lichtstärkeverteilung festgelegt, die dadurch die oben erwähnte Hauptgerade definiert. In einer Ebene senkrecht auf diese Hauptgerade, wird nun ausgehend vom Durchstoßpunkt der Hauptgeraden durch diese Ebene jene Richtung fixiert in die, von diesem Durchstoßpunkt weg, die Lichtstärke die geringste Abnahme aufweist. Diese Richtung ist sozusagen das logische Gegenteil zum Gradienten der Lichtstärkeverteilung am Ort des Maximums, der die Richtung des stärksten Rückgangs der Lichtstärke von einem Punkt aus beschreibt. Zusammen mit der Hauptgeraden durch den Ursprung des gedachten Koordinatensystems in Richtung des Maximums und der Richtung des geringsten Rückgangs der Lichtstärke ausgehend von diesem Maximum ist nun die durch den Polarwinkel von 0° gedachte Hauptebene definiert, was im Falle eines kartesischen Koordinatensystems der x-y-Ebene entsprechen würde.

Eine ausgeprägte Hell-/Dunkelgrenze kann nun dadurch erreicht werden, dass die Leuchtdichte in einer durch einen Azimutwinkel von 0° gedachten Ebene innerhalb eines Polarwinkelbereichs von 4°, vorzugsweise von 3°, um mindestens 90% gegenüber der Leuchtdichte, die in Richtung des Maximums der Lichtstärkeverteilung auftritt, abnimmt. Mit anderen Worten: Der Wert der Leuchtdichte in einer durch einen Azimutwinkel von 0° gedachten Ebene, der in Richtung des Maximums der Lichtstärkeverteilung auftritt, ist ein Referenzwert auf den sich die erfindungsgemäße Abnahme der Leuchtdichte bezieht. Beträgt dieser Referenzwert zB 100.000 cd/m², nimmt die Leuchtdichte innerhalb eines Polarwinkelbereichs von in etwa 3° dann auf einen Wert von weniger 10.000 cd/m² ab. Dabei ist die durch den Azimutwinkel von 0° gedachte Ebene jene Ebene, die senkrecht auf die Hauptebene angeordnet ist und dabei die Gerade durch den Ursprung in Richtung des Maximums der Lichtstärkeverteilung enthält, was im Falle eines kartesischen Koordinatensystems der x-z-Ebene entsprechen würde.

Durch einen derart starken Rückgang der Leuchtdichte in der durch den Azimutwinkel von 0° gedachten Ebene innerhalb eines Polarwinkelbereich von 3° ist eine ausgeprägte Hell-/Dunkelgrenze der Leuchtdichte realisiert und die Beleuchtung durch eine erfindungsgemäße Beleuchtungseinrichtung kann überaus genau gesteuert werden. Dadurch können Bereiche mit hoher Leuchtdichte ausgeleuchtet werden während andere, räumlich nahe liegende Bereiche nur mit geringer Leuchtdichte ausgeleuchtet werden. Dabei sind diese Bereiche durch die erfindungsgemäße Hell-/Dunkelgrenze getrennt. Dadurch kann es vermieden werden, Personen die in Richtung der Beleuchtungseinrichtung blicken zu blenden und dennoch andere, in der Nähe liegende Bereiche gut auszuleuchten. Je nach Anwendungsgebiet der erfindungsgemäßen Beleuchtungseinrichtung kann es notwendig sein, diese Hell-/Dunkelgrenze schärfer oder weniger scharf auszuprägen. Besonders im Verkehrsbereich kann es vorgesehen sein, in einem Bereich von wenigen Zehntel-Graden den massiven Rückgang der Leuchtdichte auszuführend, während bei anderen Beleuchtungseinrichtungen, wie beispielsweise für öffentliche Plätze oder Wände der die Abnahme innerhalb des Polarwinkelbereichs von 3° eine genügend ausgeprägte Hell-/Dunkelgrenze darstellt.

Weitere vorteilhafte Ausführungen der Erfindung sind in den abhängigen Ansprüchen definiert.

In einer bevorzugten Ausführungsform der Erfindung ist zwischen der Lichtquelle und der Lichtaustrittsfläche ein Lichtleitelement angeordnet, wobei die Lichtaustrittsfläche der Beleuchtungseinrichtung beispielsweise durch von der Lichtquelle weiter entfernte Bereiche der Oberfläche des Lichtleitelements ausgebildet sein kann. Dabei ist vorgesehen, dass Lichtstrahlen eines von der Lichtquelle emittierten Lichtbündels auf ihrem Weg durch das Lichtleitelement in Richtung der Lichtaustrittsfläche teilweise umgelenkt und zusätzlich oder alternativ teilweise absorbiert werden. Dabei wird nicht das gesamte von der Lichtquelle ausgestrahlte Lichtbündel absorbiert und/oder umgelenkt, sondern nur jene Strahlen oder zumindest der Großteil jener Strahlen die derart schräg aus dem Lichtleitelement und in Folge aus der Lichtaustrittsfläche austreten, dass die erfindungsgemäße Leuchtdichtenverteilung nicht realisierbar wäre, weil ansonsten eine zu hohe Leuchtdichte außerhalb der beanspruchten Winkelverteilung vorhanden wäre.

Die Richtung des Maximums der Lichtstärkeverteilung definiert die Richtung die sich ausgehend vom Zentrum der Lichtaustrittsfläche in Richtung des abgestrahlten Lichts ergibt, wenn die durch den Polarwinkel von 0° gedachte Hauptebene mit der durch den Azimutwinkel von 0° gedachten Ebene geschnitten wird. Die zugehörige Schnittgerade ist die angeführte Hauptgerade. In diese Richtung weist die Leuchtdichteverteilung einen gewissen Wert auf, der als Bezugswert für die rasche Abnahme der Leuchtdichte im erfindungsgemäßen Polarwinkelbereich von 3° oder 1° dient. In einer bevorzugten Ausführungsform der Erfindung ist aber der in Richtung des Lichtstärkemaximums vorgefundene Wert der Leuchtdichte bereits sehr hoch und weist einen Wert von mindestens 70% eines Maximums der Leuchtdichteverteilung auf. Mit anderen Worten: Die Leuchtdichte, die in Richtung des Maximus der Lichtstärke ist zwar nicht maximal, weist aber einen Wert von mindestens 70% des Maximums der gegebenen Leuchtdichteverteilung auf. Es kann natürlich auch vorgesehen sein, dass die Richtung eines Maximums der Leuchtdichteverteilung und die Richtung eines Maximums der Lichtstärkeverteilung zumindest annähernd übereinstimmen und somit ein Maximum der Leuchtdichteverteilung ungefähr in Richtung eines Maximums der Lichtstärkeverteilung angeordnet ist.

In einer besonders bevorzugten Ausführungsform der Erfindung liegt die Richtung des Maximums der Lichtstärkeverteilung nahe an der ausgeprägten Hell-/Dunkelgrenze. Dadurch ist die oben erwähnte räumliche Trennung von hell ausgeleuchteten Bereichen mit hoher Leuchtdichte und den schwach ausgeleuchteten mit geringer Leuchtdichte besonders effektiv, da in diesen Bereichen mit hoher Leuchtdichte auch noch das Maximum der Lichtstärke liegt. Eine derartige Hell-/Dunkelgrenze ist somit besonders beeindruckend. Zu diesem Zweck kann es vorgesehen sein, dass ausgehend von der Richtung des Lichtstärkemaximums, welche durch den Azimutwinkel von 0° und den Polarwinkel von 0° gegeben ist, die Leuchtdichte innerhalb eines durch die Polarwinkel von 0° und 3° gegebenen Bereichs um mindestens 90% gegenüber der Leuchtdichte, die in Richtung des Maximums der Lichtstärkeverteilung auftritt, abnimmt.

Eine weitere Ausführungsform der Erfindung sieht vor die Hell-/Dunkelgrenze durch einen Rückgang der Leuchtdichte um mindestens 60%, vorzugsweise mindestens 70%, gegenüber der Leuchtdichte, die in Richtung des Maximums der Lichtstärkeverteilung auftritt, innerhalb eines durch die Polarwinkel von 0° und 1° gegebenen Bereichs auszubilden.

In einer bevorzugten Ausführungsform der Erfindung nimmt die Leuchtdichte in einer durch einen Azimutwinkel von 0° gedachten Ebene innerhalb eines durch die Polarwinkel von 2° und 5° gegebenen Bereichs auf einen Wert von weniger als 3% der Leuchtdichte, die in Richtung des Maximums der Lichtstärkeverteilung auftritt, ab, wobei es vorteilhaft sein kann, dass die Leuchtdichte in Richtung des Lichtstärkemaximums einen Wert von mindestens 70% des absoluten Leuchtdichtemaximums aufweist. Durch einen derart starken Rückgang der Leuchtdichte wird die Helligkeit in diesem Winkelbereich von einem Beobachter, der in Richtung der Beleuchtungseinrichtung blickt, als sehr gering empfunden, während andererseits beim Maximum der Lichtstärke und bei Polarwinkeln kleiner als 2° genügend Licht vorhanden ist, d.h. genügend Lichtenergie in diese Richtung abgestrahlt worden ist, sodass die Beleuchtungseinrichtung diesen Bereich gut ausleuchten kann. Dadurch wird neben der, durch den rapiden Rückgang der Leuchtdichte erzeugten, ausgeprägten Hell-/Dunkelgrenze erreicht, dass der Bereich zwischen dem Polarwinkel von 2° und dem Polarwinkel von 5° in der durch den Azimutwinkel von 0° gedachten Ebene gegenüber herkömmlichen Beleuchtungseinrichtungen effektiv ausgeblendet wird, weil in diesem Bereich sehr geringe Werte der Leuchtdichte vorgefunden werden. Dadurch kann vermieden werden, dass ein Beobachter, der in diesem Winkelbereich in Richtung der Lichtaustrittsfläche blickt, von einer erfindungsgemäßen Beleuchtungseinrichtung geblendet wird.

In besonders bevorzugten Ausführungsformen der Erfindung ist eine derartige Hell-/Dunkelgrenze bzw. ein ausgeblendeter Bereich mit einer sehr geringen Leuchtdichte nicht nur in der durch den Azimutwinkel von 0° gedachten Ebene vorhanden, sondern für alle Ebenen die orthogonal auf die Hauptebene angeordnet sind und in einem ganzen Bereich von Azimutwinkeln um den Azimutwinkel von 0° liegen. Diese durch den Azimutwinkel von ϕ gedachten Ebenen werden im Folgenden mit C(ϕ)-Ebenen bezeichnet. Dabei nimmt die Leuchtdichte innerhalb eines Polarwinkelbereichs von 3°, wobei es sich um den Bereich zwischen den Polarwinkeln von 0° und 3° handeln kann, in der jeweiligen C(ϕ)-Ebene gegenüber dem Wert der Leuchtdichte in Richtung des Polarwinkels von 0° und des Azimutwinkels ϕ stark ab, sodass eine ausgeprägte Hell-/Dunkelgrenze in einem ganzen Intervall von Azimutwinkeln realisiert wird und somit eine ganze Lichtkeule mit ausgeprägter Hell-/Dunkelgrenze ausgebildet ist. Der Referenzwert der Leuchtdichte, auf den sich die Abnahme der Leuchtdichte innerhalb eines gewissen Polarwinkelbereichs bezieht, ist demnach für durch Azimutwinkel ungleich 0° gedachte Ebenen nicht der Wert der Leuchtdichte, die in Richtung des Maximums der Lichtstärkeverteilung, also in Richtung der Hauptgeraden, auftritt, sondern der Wert der Leuchtdichte, der sich in der jeweiligen durch den Azimutwinkel gegebenen Ebene in Richtung des Polarwinkels 0° ergibt. Diese Richtung ist zwar auch in der Hauptebene angeordnet, hat aber einen Azimutwinkel ungleich 0°. Für die durch den Azimutwinkel von 0° gedachte Ebene bezieht sich die Abnahme der Leuchtdichte natürlich, wie oben erwähnt, auf die Leuchtdichte, die in Richtung der Hauptgerade auftritt.

Besonders vorteilhaft kann es sein, wenn im Azimutwinkelbereich zwischen -40° und 40° oder anders ausgedrückt zwischen 320° und 40° (inklusive 0°) die Leuchtdichte innerhalb eines Polarwinkelbereichs von 3° um mindestens 90% gegenüber der Leuchtdichte, die in Richtung des Polarwinkels von 0° und des jeweiligen Azimutwinkels ϕ auftritt, abnimmt.

Es kann aber auch vorgesehen sein, den erfindungsgemäßen Rückgang der Leuchtdichte um mindestens 90% gegenüber jenes Werts, der in Richtung des Maximums der Lichtstärkeverteilung auftritt, innerhalb eines Polarwinkelbereich von 2° oder sogar eines Polarwinkelbereichs von 1° vorzusehen. Dies kann für die durch den Azimutwinkel von 0° gedachte Ebene gelten, aber auch für alle C(ϕ)-Ebenen in einem Azimutwinkelbereich zwischen -40° und 40°

Es kann zusätzlich oder alternativ vorgesehen sein, dass die Leuchtdichte um mindestens 60%, vorzugsweise um mindestens 70%, gegenüber dem Wert der Leuchtdichte in Richtung des Polarwinkels von 0° und des Azimutwinkels ϕ innerhalb eines durch die Polarwinkelbereichs von 1°abnimmt, wobei es sich um den Bereich zwischen den Polarwinkeln von 0° und 1° in der jeweiligen C(ϕ)-Ebene handeln kann.

Dabei kann es auch vorgesehen sein, dass die Leuchtdichte und/oder die Lichtstärke in Richtung des Polarwinkels von 0° ein lokales Maximum in der Leuchtdichtekurve bzw. der Lichtstärkekurve in der jeweiligen C(ϕ)-Ebene darstellt. Dabei kann es wiederum zusätzlich oder alternativ vorgesehen sein, dass die Hell-/Dunkelgrenze nahe der Hauptebene, also nahe des gegebenenfalls vorhandenen lokalen Maximums der Lichtstärke liegt.

In einer weiteren Ausführungsform kann es vorgesehen sein, dass in einem ganzen Bereich von Azimutwinkeln um den Azimutwinkel von 0°, die Leuchtdichte im Polarwinkelbereich zwischen 2° und 5° in der jeweiligen C(ϕ)-Ebene auf einen Wert von weniger als 8%, vorzugsweise weniger 2% der Leuchtdichte, die in Richtung des Polarwinkels von 0° und des jeweiligen Azimutwinkels ϕ auftritt, abnimmt. Dadurch ist das oben angeführte Ausblenden dieses Bereichs durch die dort anzutreffende, geringe Leuchtdichte, für alle diese Azimutwinkel realisiert und es gibt in einem ausgedehnten Bereich der Lichtkeule einen ausgeblendeten Bereich. Dabei handelt es sich bevorzugt um den Azimutwinkelbereich zwischen -40° und 40° oder anders ausgedrückt zwischen 320° und 40° (inklusive 0°).

Obwohl die erfindungsgemäße Hauptebene, sowie die senkrecht dazu angeordneten C(ϕ)-Ebenen generell beliebige Lage aufweisen können, kann es bei einer Ausführungsform der Erfindung, zum Beispiel bei Bühnenbeleuchtungen oder zur Beleuchtung von Straßen und dergleichen, vorgesehen sein, dass die Hauptebene zumindest annähernd horizontale Lage aufweist und daher die zumindest annähernd horizontale Lichtausstrahlung in Vorwärtsrichtung relevant ist. Aus diesem Grund ist in einer Ausführungsform der Erfindung vorgesehen, dass die im Polarwinkel von 0° gedachte Hauptebene selbst eine Horizontalebene ist oder aber, dass die Horizontalebene im gedachten Koordinatensystem in einem Polarwinkelbereich zwischen 0,1° und 2°, vorzugsweise bei etwa 1°, angeordnet ist. Dies bedeutet, dass das Maximum der Lichtstärke nicht in der Horizontalebene angeordnet ist, sondern knapp darunter, vorzugsweise in einem Polarwinkelbereich zwischen 0,1° und 2° unterhalb der Horizontalebene. Aus diesem Grund ist das Maximum der Lichtstärkeverteilung, welches ja die Hauptgerade und zusammen mit der Richtung der geringsten Abnahme der Lichtstärke, ausgehend von diesem Maximum, die Hauptebene, dh die durch den Polarwinkel von 0° gedachte Ebene definiert, in der Nähe der Hell-/Dunkelgrenze angeordnet. Dadurch erscheint der beleuchtete Teil bei Winkeln unterhalb der Hell-/Dunkelgrenze besonders hell. Dies gilt insbesondere aus der Sicht eines Fahrers, falls die erfindungsgemäße Beleuchtungseinrichtung als Fahrzeugscheinwerfer angewendet ist. Dennoch werden entgegenkommende Verkehrsteilnehmer, deren Gesichtsfeld bei Winkel oberhalb der Hell-/Dunkelgrenze nicht geblendet.

Die Horizontalebene kann dabei aus der Hauptebene durch eine Schwenkung bezüglich des Ursprungs um den entsprechenden Polarwinkel hervorgehen. Dabei kann jene Gerade der Hauptebene, welche durch den Azimutwinkel von 90° gegeben ist, als gedachte Schwenkachse ausgebildet sein. Vor allem im Verkehrsbereich kann es bei Beleuchtungseinrichtungen deren Maximum der Lichtstärke und/oder Leuchtdichte in einer Horizontalebene liegt vorkommen, dass, je nach Größenverhältnissen der Fahrzeuge und Anordnung der Scheinwerfer, die entgegenkommenden Verkehrsteilnehmer geblendet werden. Liegt allerdings das Maximum der Lichtstärke knapp unterhalb der Horizontalebene und weist die Beleuchtungseinrichtung gegebenenfalls zudem eine erfindungsgemäße Hell-/Dunkelgrenze mit einem ausgeblendeten Bereich, wo die Leuchtdichte nur geringe Werte annimmt, auf, wird die Blendwirkung stark reduziert, da das Blickfeld der entgegenkommenden Verkehrsteilnehmer in der Entfernung, in der eine gefährliche Blendwirkung auftreten kann, in genau diesem, in der Erfindung ausgeblendeten Bereich mit geringer Leuchtdichte angeordnet sind.

Herkömmliche Beleuchtungseinrichtungen, die aufgrund einer vorgegebenen zu erreichenden Lichtstärkeverteilung konstruiert worden sind, weisen keine ausgeprägte Hell-/Dunkelgrenze bezüglich einer messbaren Leuchtdichteverteilung und keinen derartigen Bereich mit niedriger Leuchtdichte knapp oberhalb des Maximums der Lichtstärke auf und sind daher bezüglich einer möglichen Blendung, beispielsweise von entgegenkommenden Verkehrsteilnehmern potentiell gefährlich. Aus diesem Grund müssen herkömmliche Scheinwerfersysteme für Kraftfahrzeuge auch über ein Fernlicht und Abblendlicht verfügen, wobei das Abblendlicht noch zusätzlich mit komplizierten Vorrichtungen so gesteuert wird, dass der von ihm ausgeleuchtete Bereich stark asymmetrisch ist, in dem der in Fahrtrichtung rechts liegende Bereich stärker ausgeleuchtet wird als der in Fahrtrichtung links liegende Bereich.

Da bei einer erfindungsgemäßen Beleuchtungseinrichtung eine stark ausgeprägte Hell-/Dunkeigrenze für die Leuchtdichteverteilung vorhanden ist und gegebenenfalls in einem Polarwinkelbereich zwischen 2° und 5° eine bezüglich der Leuchtdichte beim Polarwinkel von 0° sehr geringe Leuchtdichte vorzufinden ist, kann auf eine derartige umständliche Konstruktion verzichtet werden und es ist daher in einer Ausführungsform der Erfindung vorgesehen, dass die Leuchtdichte bezüglich der durch den Azimutwinkel von 0° gedachten Ebene symmetrisch ist.

In einer weiteren Ausführungsform der Erfindung ist vorgesehen, dass der Rückgang der Leuchtdichte bezüglich des Werts beim Polarwinkel von 0°, also ausgehend von der Hauptebene, in Richtung positiver Polarwinkel stärker erfolgt als in Richtung negativer Polarwinkel. Dies kann dadurch erreicht werden, dass im Bereich positiver Polarwinkel der erfindungsgemäße Polarwinkelbereich mit der drastischen Abnahme der Leuchtdichte angeordnet ist, während bei negativen Polarwinkeln die Leuchtdichte nur langsam abnimmt oder sogar konstant bleibt oder weiter anwächst. Dadurch existiert in diesem Bereich negativer Polarwinkel keine ausgeprägte Hell-/Dunkelverlauf und der Leuchtdichteverlauf erscheint dort natürlich und fließend, wobei zusätzlich dieser Bereich mit hoher Leuchtdichte bestrahlt werden kann und gut ausgeleuchtet wird. Insgesamt bedeutet dies, dass in der entsprechenden C(ϕ)-Ebene die Leuchtdichtekurve bezüglich des Polarwinkels von 0° asymmetrisch ist und in einem Bereich positiver Polarwinkel viel stärker abnimmt als für negative Polarwinkel.

In einer vorteilhaften Weiterbildung der Erfindung ist nun vorgesehen, dass in der durch den Azimutwinkel von 0° gedachten Ebene die Leuchtdichte, zusätzlich zur Ausbildung einer ausgeprägten Hell-/Dunkelgrenze durch die rapide Abnahme der Leuchtdichte in einem knappen Polarwinkelbereich und gegebenenfalls zusätzlich zur Ausbildung eines beispielsweise durch die Polarwinkel von 2° und 6°, vorzugsweise von 2° und 5°, gegebenen Bereich, der sehr geringe Werte der Leuchtdichte aufweist und dadurch effektiv ausgeblendet wird, die Leuchtdichte innerhalb eines Polarwinkelbereich zwischen 5° und 60° wieder auf einen Wert von mehr als der Hälfte des Wertes der Leuchtdichte, die in Richtung des Maximums der Lichtstärke auftritt, ansteigt. Ausgehend vom Maximum der Lichtstärke gibt es daher in Richtung positiver Polarwinkel zunächst einen Bereich von Polarwinkeln, gekennzeichnet durch eine rasche und drastische Abnahme der Leuchtdichte und gegebenenfalls einen ausgeblendeten Bereich von sehr geringer Leuchtdichte, beispielsweise zwischen den Polarwinkeln von 2° und 6° oder 2° und 5°, und daran anschließend bei noch höheren Werten der Polarwinkel einen gut ausgeleuchteten Bereich mit hoher Leuchtdichte. Ein derartiger zusätzlich ausgeleuchteter Bereich bewährt sich besonders bei der Verwendung einer erfindungsgemäßen Beleuchtungseinrichtung als Fahrzeugsscheinwerfer, aber auch bei Beleuchtungen für Innenräume oder Außenwände wo mehrere räumlich getrennte Bereiche stark ausgeleuchtet werden sollen, während andere dazwischen liegende Bereiche unter Ausbildung einer ausgeprägten Hell-/Dunkeigrenze der Leuchtdichte ausgeblendet werden sollen. Für die Anwendung bei Fahrzeugscheinwerfern gilt, dass die entgegenkommenden Verkehrsteilnehmer von Polarwinkeln größer als 5° oder zumindest größer als 6° hinsichtlich möglicher Blendwirkung nicht betroffen sind. Dennoch kann es sehr vorteilhaft sein diese Bereiche zusätzlich zum Bereich des Maximums der Leuchtdichte auszuleuchten, da sich dort häufig Verkehrsschilder, insbesondere Überkopfschilder, befinden, die durch einen derartigen, zusätzlich ausgeleuchteten Bereich rechtzeitig erkennbar sind.

Dabei kann es zusätzlich vorgesehen sein, dass ein derartiger zusätzlich ausgeleuchteter Bereich im Bereich von Polarwinkeln größer als 5° nicht nur für die durch den Azimutwinkel von 0° gedachten Ebene vorhanden ist, sondern für einen ganzen Bereich von durch Azimutwinkel ϕ gegebenen C(ϕ)-Ebenen. Vorzugsweise handelt es sich dabei um die C(ϕ)-Ebenen mit einem Azimutwinkel zwischen -40° und 40°, inklusive der durch den Azimutwinkel von 0° gedachten Ebene, d.h. für Azimutwinkel zwischen 320° und 40°.

Dabei kann es vorgesehen sein, dass für manche dieser C(ϕ)-Ebenen die Leuchtdichte in diesem zusätzlich ausgeleuchteten Bereich bei Polarwinkeln von mindestens 5°, die Leuchtdichte deutlich größer ist als beim Polarwinkel von 0°. Besonders vorteilhaft ist dies für weiter seitlich vom Azimutwinkel 0° angeordnete Ebenen, also beispielsweise C(320°), C(340°), C(20°) und C (40°), wo die Leuchtdichte in diesem zusätzlich ausgeleuchteten Bereich mehr als das 20-fache oder sogar mehr als das 100-fache der Leuchtdichte, die in Richtung des Polarwinkels von 0° in der jeweiligen C(ϕ)-Ebene auftritt, ansteigt. Dies ist wiederum besonders günstig bei der Anwendung einer erfindungsgemäßen Beleuchtungseinrichtung als Fahrzeugscheinwerfer, wo ja durch diesen zusätzlich ausgeleuchteten Bereich Verkehrsschilder erkenntlich gemacht werden sollen und diese oft seitlich am Straßenrand angebracht sind.

Zur Realisierung der erfindungsgemäßen Leuchtdichteverteilung mit einer ausgeprägten Hell-/Dunkelgrenze kann es in einem Ausführungsbeispiel der Erfindung vorgesehen sein, dass die erfindungsgemäße Beleuchtungseinrichtung ein langgestrecktes Lichtleiteleriient umfasst, das in Richtung einer Hauptachse langgestreckt ist, und eine Lichteintrittsfläche, wo von der oder den Lichtquellen abgestrahltes Licht in das Lichtleitelement eintritt. Das Lichtleitelement weist zwei oder mehr übereinander angeordneten Lichtleiter und kann zusätzlich die Lichtaustrittsfläche der erfindungsgemäßen Beleuchtungseinrichtung aufweisen. In einer Ausführungsform ist dabei vorgesehen, dass ein sich in Längsrichtung erstreckender Teilbereich der Wandung der einzelnen Lichtleiter strukturiert und/oder geschwärzt ist.

Durch die Längserstreckung des Lichtleitelements kann sich dabei auf die hauptsächliche Richtung der Lichtausstrahlung beziehen, beispielsweise wenn die Hauptachse parallel zur Hauptgerade angeordnet ist, die in Richtung des Maximums der Lichtstärkeverteilung weist. Dabei kann jedes der übereinander angeordneten Lichtleitelemente eine Hauptachse aufweisen, welche dann im Wesentlichen parallel zueinander sind. Die übereinander angeordneten Lichtleiter können dabei beispielsweise durch Verkleben aneinander fixiert werden. Die Hauptachse des Lichtleitelements ist dann eine dazu parallele Gerade beispielsweise durch den geometrischen Mittelpunkt der Lichtaustrittsfläche und ist gegebenenfalls ident mit der Hauptgeraden. Für den Fall, dass einer oder mehrere der Lichtleiter Kanten in Längsrichtung aufweist, ist die Hauptachse im Wesentlichen parallel zu einer oder mehrerer dieser Kanten. Die Übereinanderanordnung mehrerer derartiger Lichtleiter erhöht den Lichtstrom in Richtung der Hauptachse und verbessert dadurch die Ausleuchtung durch eine Beleuchtungseinrichtung mit einem derartigen Lichtleitelement. Die an der Lichteintrittsfläche, welche quer zur Längsrichtung angeordnet ist, eintretenden Lichtstrahlen breiten sich entweder geradlinig im Lichtleitelement aus (vor allem wenn schon die in das Lichtleitelement eintretende Strahlung gebündelt ist) oder werden mittels Totalreflexion an die ebenfalls quer zur Längsrichtung angeordnete Lichtaustrittsfläche weitergeleitet.

Wird nun ein sich in Längsrichtung erstreckender Teilbereich der Wandung der Lichtleiter mit einer Struktur versehen, ist für einen auf diese Struktur auftreffenden Lichtstrahl die geometrische Bedingung für Totalreflexion nicht mehr erfüllt und eine Weiterleitung an die Lichtaustrittsfläche wird verhindert. Je nach Ausbildung dieser Struktur wird ein Bündel von Lichtstrahlen, die in diesem Bereich auf die Wandung auftreffen, teilweise gebrochen und aus dem Lichtleiter gelenkt und zusätzlich oder alternativ diffus reflektiert, die damit ebenfalls nicht mehr aus der Lichtaustrittsfläche aus dem Lichtleitelement austreten. Zusätzlich oder alternativ ist es möglich, einen sich in Längsrichtung erstreckenden Teilbereich der Wandung zu schwärzen, d.h. mit einem Material mit einem hohen, vorzugsweise über 95% liegenden Absorptionskoeffizienten zu versehen. In diesem Bereich auftreffende Lichtstrahlen werden dann ebenfalls nicht mehr in Richtung der Lichtaustrittsfläche totalreflektiert, sondern absorbiert.

Durch die Anordnung der Struktur bzw. die Schwärzung werden somit gewisse sich im Lichtleiter schräg fortpflanzende Lichtstrahlen ausgeblendet, diffus reflektiert und absorbiert. Derartige sich schräg bezüglich der Längsrichtung fortpflanzende Lichtstrahlen würden auch aus der Lichtaustrittsfläche schräg austreten und daher eine negative Auswirkung auf die Lichtbündelung haben. Somit können durch diese Maßnahmen gewisse schräg verlaufende Strahlen eliminiert werden und die Parallelisierung bzw. Bündelung des aus dem Lichtleitelement austretenden Lichts kann signifikant verbessert werden, wodurch die erfindungsgemäße Hell-/Dunkelgrenze der Leuchtdichte ausgebildet wird. Die nicht mit einer Struktur versehenen Bereiche der Wandung bzw. die nicht geschwärzten Bereiche der Wandung stehen weiterhin für Totalreflexion zur Verfügung oder können auch verspiegelt ausgebildet sein. Obwohl die bevorzugt vorgesehen ist, müssen nicht alle Lichtleiter des Lichtleitelements mit einer Struktur versehene bzw. geschwärzte Teilbereiche in ihren Wandungen aufweisen.

Durch die oben erwähnte Struktur bzw. Schwärzung kann es erreicht werden, dass mindestens 95%, vorzugsweise mehr als 99% der Strahlung die auf die mit einer Struktur versehenen bzw. geschwärzten Teilbereiche der Wandung der Lichtleiter auftreffen dort absorbiert werden. Da die in diesen Teilbereichen der Wandung auftreffende Strahlung bezüglich der Längsrichtung der Lichtleiter geneigt ist, zeichnet sich die aus der Lichtaustrittfläche austretende Strahlung durch eine hohe Parallelität bzw. Bündelung aus und weisen demnach die Hell-/Dunkelgrenze auf. Insbesondere kann eine bevorzugte Richtung der austretenden Strahlung durch die Anordnung der Struktur bzw. die Schwärzung an nur einer Seite der Wandung effektiv, bis in den Bereich von Zehntel-Graden ausgeblendet werden bzw. eine überaus ausgeprägte Hell-/Dunkelgrenze realisiert werden.

Um eine derartige spezielle Hell/Dunkelgrenze zu realisieren, beispielsweise annähernd in horizontaler Richtung bei der Verwendung eines derartigen Lichtleitelements in einem Fahrzeugscheinwerfer, kann es vorgesehen sein, ganz spezielle Teilbereiche der Wandung mit einer Struktur zu versehen und/oder zu schwärzen. Dabei bezieht sich diese Hell/Dunkelgrenze auf die von einer ein erfindungsgemäßes Lichtleitelement umfassende Beleuchtungseinrichtung erzeugte Leuchtdichteverteilung beziehen. Im Falle des Fahrzeugscheinwerfers können diese Teilbereiche an der Unterseite der Wandung der jeweiligen Lichtleiter sein, sodass die an der Unterseite in diesen Bereichen auftreffenden Lichtstrahlen absorbiert bzw. diffus reflektiert oder ausgeblendet werden. An der der Unterseite gegenüberliegenden Oberseite der Lichtleiter ist eine Totalreflexion dagegen möglich. Dort reflektierte Strahlen pflanzen sich nämlich nach unten fort und stören die zu realisierende im wesentlich horizontal Hell/Dunkeigrenze für einen Fahrzeugscheinwerfer nicht, wobei nur der unterhalb der Horizontalen angeordnete Bereich ausgeleuchtet sein soll, weil nur die schräg nach oben laufenden Lichtstrahlen von der Struktur bzw. der Schwärzung beeinträchtigt werden.

Eine weitere Anwendungsmöglichkeit eines derartigen Lichtleitelements, ist durch eine Beleuchtungseinrichtung für einen Innenraum oder einen Wandstrahler oder zur Ausleuchtung öffentlicher Plätze oder Straßen gegeben, wo ein selektiver Winkelbereich ausgeblendet und dafür ein scharf definierter Bereich, beispielsweise ein an einer Wand aufgehängtes Bild oder ein Sportfeld, ausgeleuchtet werden soll.

Durch eine Anordnung des strukturierten Bereichs über die gesamte Länge der einzelnen Lichtleiter und zusätzlich oder alternativ der geschwärzten Bereiche über im Wesentlichen die gesamte Länge der Lichtleiter wird die oben erwähnte Absorption bzw. diffuse Reflexion und Ausblendung weiter verstärkt. Dabei kann es vorgesehen sein, dass manche Bereiche geschwärzt, während andere strukturiert sind und wieder andere Bereiche der Lichtleiter können sowohl strukturiert als auch geschwärzt sein. Zur selektiven Ausbildung einer Hell/Dunkelgrenze einer Beleuchtungseinrichtung mit einem erfindungsgemäßen Lichtleitelement können Teilbereiche der Wandung verspiegelt ausgebildet sein. Vorzugsweise handelt es sich dabei um Bereiche, die den strukturierten bzw. geschwärzten Bereichen gegenüberliegend sind. Dadurch werden ebenso wie durch die Anordnung von Bereichen, an denen Totalreflexion möglich ist, Lichtstrahlen einer speziellen Richtung selektiv absorbiert oder ausgeblendet bzw. diffus reflektiert.

In einer weiteren Ausführungsform der Erfindung sind mindestens zwei der Lichtleiter unmittelbar in Kontakt und daher direkt aneinander angrenzend übereinander angeordnet. Es kann auch vorgesehen sein, dass dieser Kontakt mittels eines geeigneten Zwischenstücks nur mittelbar ausgebildet ist. Es kann weiters vorgesehen sein, dass jeder der Lichtleiter mittelbaren oder unmittelbaren Kontakt zu einem weiteren Lichtleiter hat. Es ist aber andererseits auch vorstellbar, dass die Lichtleiter beabstandet voneinander angeordnet sind. Dabei ist es aber vorteilhaft, wenn die Längsrichtungen der Lichtleiter im Wesentlichen parallel zueinander angeordnet sind.

In einer vorteilhaften Ausführungsform der Erfindung sind die einzelnen Lichtleiter prismatisch, vorzugsweise quaderförmig ausgebildet. Dabei ist es vorgesehen, dass die größte Ausdehnung des Quaders in Längsrichtung des Lichtleitelements angeordnet ist und der prismatische, vorzugsweise rechteckigförmige Querschnitt senkrecht zur Längsrichtung angeordnet ist, wobei im Falle eines Rechtecks die übereinander angeordneten Lichtleiter jeweils an der längeren Seite des Rechtecks aneinander angrenzen. Generell sind allerdings beliebige Querschnittsformen möglich, wobei es vorteilhaft ist, eine Querschnittsausdehnung viel geringer als eine andere Querschnittsausdehnung auszuführen.

In einer weiteren vorteilhaften Ausführungsform der Erfindung ist vorgesehen, dass die prismatischen Lichtleiter mit strukturierten und/oder geschwärzten Bereichen an einer Längsseite des Prismas versehen sind. Besonders vorteilhaft kann es dabei sein, dass es sich jeweils um die Unterseite der Wandung der aneinander grenzenden einzelnen Lichtleiter handelt, sodass Lichtstrahlen hauptsächlich nur mehr geradlinig oder an der Oberseite nach unten reflektiert werden, wodurch die Vorzugsrichtung des aus der Lichtaustrittsfläche austretenden Lichts geradlinig oder nach unten orientiert ist.

Für die Art der in einem sich in Längsrichtung erstreckenden Teilbereich der Wandung angeordneten Struktur gibt es natürlich auch vielfältige Möglichkeiten. Beispielsweise ist es in einer Ausführungsform der Erfindung vorgesehen, die Struktur derart auszuführen, sodass diese im Querschnitt ein Sägezahnprofil aufweist. Dabei sind dann je nach einfallendem Strahl an den im Vergleich zur restlichen Wandung schrägen Bereiche der Zahnflanken der Sägezahnstruktur die geometrischen Bedingungen für Totalreflexion nicht mehr erfüllt, sodass Teile des Strahls gebrochen und senkrecht durch die Wandung abgelenkt und damit ausgeblendet werden. An den relativ zur Wandung im Wesentlichen senkrechten Flanken werden Strahlen geblockt und damit auch aus dem Strahlenbündel ausgeblendet. Dabei weisen die Zahnflanken des Sägezahnprofils eine Zahnneigung zwischen 1 und 45°, vorzugsweise zwischen 3 und 10° auf. Diese Neigung wird dabei gegenüber der Längsrichtung gemessen, die mit der Richtung der Hauptgeraden, also mit der Richtung in die die größte Lichtstärke abgestrahlt wird, übereinstimmen kann.

In einer weiteren Ausführungsform der Erfindung weist die Struktur in ihrem Querschnitt gekrümmte Profile auf. Dabei können beispielsweise die geneigten Bereiche einer Sägezahnstruktur konkav gekrümmt sein, um die Erfüllung der geometrischen Bedingung für Totalreflexion der dort auftreffenden Lichtstrahlen zu erschweren. Aber auch anders gekrümmte oder nach einer mathematischen Funktion geformte Querschnitte der Wandstruktur sind möglich und denkbar. Vorzugsweise handelt es sich dabei um eine regelmäßig wiederholte geometrische Form.

Obwohl schon - wie oben erwähnt - durch eine Veränderung der geometrischen Verhältnisse der Wandung und zusätzlich oder alternativ durch eine einfache Erhöhung des Absorptionskoeffizienten der Wandung die Bündelung bzw. Parallelisierung des aus dem Lichtleitelement austretenden Lichts und damit die Ausprägung der erfindungsgemäßen Hell-/Dunkelgrenze wesentlich verbessert werden kann, ist dahingehend eine weitere Verbesserung möglich, wenn die Absorption bzw. diffuse Reflexion an den strukturierten bzw. geschwärzten Bereichen weiter erhöht wird. Zu diesem Zweck ist es in einer vorteilhaften Ausführungsform der Erfindung vorgesehen, auf die Struktur oder andere Bereiche der Wandung eine Mikrostruktur anzuordnen, beispielsweise indem diese Bereiche diffus mattiert werden, wobei die Rautiefe dieser Mattierung zwischen 0,01 µm und 20 µm, vorzugsweise etwa 0,4 µm beträgt. Eine derartige diffuse Mattierung hat aufgrund ihrer Mikrostruktur den Effekt, dass an den mit der Mattierung versehenen Bereichen auftreffende Lichtstrahlen verstärkt absorbiert bzw. diffus reflektiert wird und somit ein schräger Strahlenverlauf verhindert wird, was sich wiederum in erhöhter Parallelität bzw. Bündelung der aus der Lichtaustrittsfläche austretenden Strahlung bemerkbar macht, indem die Leuchtdichte in einem erfindungsgemäßen geringen Polarwinkelbereich rasch gegenüber ihrem in Richtung der Hauptgeraden abgestrahlten Wert abnimmt, beispielsweise in der durch den Azimutwinkel von 0° gedachten Ebene.

In einer weiteren Ausführungsform der Erfindung ist es vorgesehen, an den Bereichen mit bereits vorhandener Struktur und/oder Schwärzung oder auch an weiteren Bereichen der Wandung eine Nanostruktur mit einer Rautiefe zwischen 5 nm und 400 nm anzuordnen. Eine derartige Nanostruktur ist beispielsweise durch gezieltes Aufdampfen von als Störstellen für die Lichtreflexion dienenden Teilchen herstellbar. Durch die oben erwähnte Mikrostruktur und diese Nanostruktur ist die damit versehene Oberfläche der Wandung stark verästelt und wenig glatt, sodass dort bei den meisten der eintreffenden Strahlen die Bedingung für Totalreflexion nicht mehr erfüllt ist und zudem parallel auftreffende und in knappem Abstand voneinander reflektierte Strahlen gänzlich andere Richtungen aufweisen, also diffus reflektiert werden. Schräg auf die Wandung in diesem Bereich auftreffende Strahlen werden also absorbiert oder derart diffus reflektiert, dass nur mehr ein geringer Teil dieser Strahlung an der Lichtaustrittsfläche aus dem Lichtleitelement austritt.

In einer Ausführungsform der Erfindung ist die Strukturierung und/oder die Schwärzung von Teilbereichen der Wandung der Lichtleiter durch mehrere übereinander angeordnete dünne Schichten, die auch unter dem Begriff "thin-films" im Stand der Technik bekannt sind, ausgebildet. An den Bereichen der Wandung wird somit ein Multilayer-thin-film angeordnet. Die dünnen Schichten sind dabei insgesamt möglichst lichtundurchlässig, das heißt, Licht welches durch die beispielsweise aus Glas bestehenden Lichtleiter an der Wandung nach außen tritt, soll zu einem möglichst hohen Anteil absorbiert werden. Das Erscheinungsbild dieser mehreren übereinander angeordneten dünnen Schichten ist daher schwarz, sodass die mehreren dünnen Schichten die erfindungsgemäße Schwärzung der Lichtleiter ausbilden. Aufgrund der sehr kleinen Dicke der dünnen Schichten ist auch eine Strukturierung der Wandung gegeben, die bei entsprechender Dicke auch zu einer Nanostruktur zu zählen ist.

Bei der übereinander erfolgenden Anordnung der dünnen Schichten sind bevorzugt mindestens zwei Absorptionsschichten und mindestens zwei Interferenzschichten vorgesehen, wobei die Absorptionsschichten für Licht des sichtbaren Spektrums zumindest teilweise absorbierend sind und die Interferenzschichten für Licht des sichtbaren Spektrums im Wesentlichen durchlässig und nur wenig absorbierend sind. Dabei folgt in alternierender Weise auf eine Absorptionsschicht eine Interferenzschicht, wobei an der Außenseite der mehreren dünnen Schichten, das heißt an jener Seite, die von der Wandung des Lichtleiters abgewandt ist, eine deckende, abschließende Metallschicht vorgesehen sein kann. Durch diese alternierende Anordnung von Absorptions- und Interferenzschichten ist es - bei geeigneter Wahl der Schichtdicke - möglich, mittels Absorption und destruktiver Interferenz eine möglichst hohe Schwärzung, das heißt einen möglichst hohen Absorptionsgrad zu erreichen.

Die Verfahren zu Herstellung derartiger dünnen Schichten sind im Stand der Technik unter dem Schlagwort "Dünnschichttechnologie" bekannt. Beispiele derartiger Herstellungsverfahren sind PVD-Verfahren (physical vapour deposition - Verfahren) wie zum Beispiel Sputtern oder thermisches Verdampfen im Vakuum. Je nach gewünschtem Reflexions- bzw. Absorptionsgrad kann es vorgesehen sein, insgesamt zwischen drei und sieben, vorzugsweise fünf, derartige dünne Schichten übereinander anzuordnen.

Als Absorptionsschichten kommen beispielsweise Metallschichten wie zum Beispiel Chromschichten in Frage, während sich Schichten aus Metalloxid, wie beispielsweise SiO₂ für die Interferenzschichten eignen. Die Schichtdicken werden dabei so gewählt, dass zum Zwecke der destruktiven Interferenz der Reflexionsgrad für den für die Erfindung wesentlichen sichtbaren Spektralbereich möglichst gering ist. Bei senkrecht einfallendem Licht betragen die Reflexionswerte beispielsweise zwischen 1 und 5 %. Bevorzugt betragen die Dicken der Absorptionsschichten zwischen 2 nm und 15 nm, während die Dicken der Interferenzschichten zwischen 30 nm und 100 nm betragen. Die lichtundurchlässige abschließende Metallschicht kann eine Dicke von mehr als 100 nm aufweisen. Es ist dabei möglich, dass die Schichtdicken je nach zu beschichtender geometrischer Form der Lichtleiter angepasst werden. Beispielsweise kann es vorgesehen sein, dass bei der Beschichtung einer schrägen Fläche ein um 15 % höhere Schichtdicke angeordnet wird, um die gewünschten Interferenzbedingungen zu erzeugen.

In einer weiteren Ausführungsform der Erfindung ist die Struktur der Teilbereiche der Wandung der Lichtleiter durch eine Mehrzahl optischer Gitter ausgebildet. Die optischen Gitter bestehen dabei aus jeweils einer Mehrzahl von Gitterpunkten (Dots) die speziell berechnete Profile aufweisen und Licht in spezielle Richtungen umlenken. Die optischen Gitter dienen daher als Oberflächenstrukturierungen zur Lichtlenkung. Dabei wird durch eine gezielte räumliche Kombination dieser Gitterpunkte sowie deren Größe und Form das Licht in eine gewünschte Richtung umgelenkt, wobei die Lichtführung an die jeweiligen lokalen geometrischen und auch spektralen Bedingungen der Lichtleiter angepasst ist.

Die sich in Längsrichtung erstreckenden Teilbereichen der Wandung angeordnete Struktur stellt eine Störung der ansonsten plan verlaufenden Wandung dar. Dabei ist in einer Ausführungsform der Erfindung vorgesehen, dass die Tiefe dieser Störung, d.h. das Ausmaß der Struktur in im Wesentlichen senkrechter Richtung zur Wandung ein Verhältnis zur kleinsten Querschnittsausdehnung des jeweiligen Lichtleiters von weniger als 1 zu 20, vorzugsweise weniger als 1:50, aufweist, wobei eine gegebenenfalls zusätzlich angeordnete Mikrostruktur, beispielsweise in Form einer Beschichtung mittels einer diffusen Mattierung, ein diesbezügliches Verhältnis von weniger als 1 zu 500 aufweist und eine gegebenenfalls zusätzlich angeordnete Nanostruktur von weniger als 1:5000. Im Falle eines rechteckigen Querschnitts ist die kleinste Querschnittsausdehnung dabei die Höhe der Lichtleiter, welche in jener Richtung angeordnet ist, in welcher die einzelnen Lichtleiter übereinander angeordnet werden.

Für ein erfindungsgemäßes Lichtleitelement kann es besonders vorteilhaft sein, dass es über eine ausgeprägt längliche Struktur verfügt. In einer Ausführungsform der Erfindung ist das Verhältnis der kleinsten Querschnittsausdehnung der Lichtleiter zur Länge des jeweiligen Lichtleiters kleiner als 1 zu 20, vorzugsweise kleiner als 1 zu 60. Ein Beispiel eines derartigen Lichtleiters weist eine Länge von 58 mm und eine kleinste Querschnittsausdehnung von 1,1 mm auf, sodass das Verhältnis der kleinsten Querschnittsausdehnung des Lichtleiters zur Länge des Lichtleiters 1 zu 52,7 beträgt.

In einer weiteren Ausführungsform der Erfindung ist vorgesehen, dass die quer zur Längsrichtung angeordnete Lichtaustrittsfläche, welche durch ein Ende der jeweiligen Lichtleiter gebildet werden kann, nicht aus einer bündigen Übereinanderanordnung der Lichtleiter besteht. Stattdessen ist vorgesehen, dass die Lichtleiter bei der Austrittsfläche des Lichtleitelements stufenförmig angeordnet sind. Dabei kann vorgesehen sein, dass die Länge der Lichtleiter von einer Stufe zur nächsten zunimmt, wobei die Lichtleiter an der Lichteintrittsfläche bündig übereinander angeordnet sind. Dabei kann vorgesehen sein, dass die Länge der Lichtleiter in jene Richtung zunimmt, in der schräg verlaufende Strahlen aus dem Strahlenbündel ausgeblendet werden sollen.

In einer konkreten Einbausituation eines erfindungsgemäßen Lichtleitelements in eine Beleuchtungseinrichtung, wo schräg nach oben verlaufende Strahlen ausgeblendet werden sollen, kann es besonders vorteilhaft sein, dass der längste Lichtleiter dabei an der oberen Seite des Lichtleitelements angeordnet ist und die Länge der Lichtleiter dann in Stufen zu den unteren Lichtleitern hin abnimmt, wobei die Stufen an der Lichtaustrittsfläche angeordnet sind. Eine derartige stufenförmige Anordnung hat den Vorteil, dass Strahlen, die bei einem kürzeren Lichtleiter aus der Lichtaustrittsfläche austreten und schräg nach oben verlaufen, von darüber angeordneten längeren Lichtleitern reflektiert oder absorbiert werden können. Dadurch wird die Parallelisierung bzw. Bündelung des austretenden Lichts weiter verbessert, weil Strahlen, die in Richtung der Zunahme der Stufen verlaufen, von längeren Stufen geblockt und damit ausgeblendet werden. Dabei erweist es sich als besonders vorteilhaft, wenn die mit einer Struktur versehenen Bereich der Wandung bzw. die geschwärzten Bereiche der Wandung immer an jener Seite der Lichtleiter angeordnet ist, an der ein jeweils kürzerer Lichtleiter angrenzt.

In einer weiteren Ausführungsform der Erfindung ist vorgesehen, dass die Lichtaustrittsfläche und/oder die Lichteintrittsfläche über optisch behandelte Bereiche verfügt. Dabei kann die Lichtaustrittsfläche und/oder Lichteintrittsfläche der übereinander angeordneten und vorzugsweise durch Verkleben aneinander fixierten Lichtleiter plan poliert sein. Die Lichtaustrittsfläche und Lichteintrittsfläche können dabei so plan geschliffen und/oder poliert werden, dass die Lichtaustrittsfläche und Lichteintrittsfläche nicht senkrecht auf die Hauptachse des Lichtleitelements, angeordnet sind, sondern in für ein spezifisches Ausblendverhalten notwendige Winkel relativ zur Hauptachse, dh die Lichteintrittsfläche und/oder die Lichtaustrittsfläche sind bezüglich einer zur Hauptachse senkrechten Ebene geneigt. Zusätzlich oder alternativ kann noch mindestens einer der Lichtleiter bezüglich einer Hauptachse geneigt sein.

Es kann aber auch vorgesehen sein, dass die Lichteintrittsfläche und zusätzlich oder alternativ die Lichtaustrittsfläche die Funktion einer Linse erfüllt, indem die Lichtaustrittsfläche und/oder die Lichteintrittsfläche einen, beispielsweise asphärischen, Linsenschliff erhält. Dies kann nützlich sein, um den austretenden Lichtstrom zu erhöhen sowie die Bündelung bzw. Parallelisierung der eintretenden Lichtstrahlen zu verbessern.

Des Weiteren kann es vorgesehen sein, dass eine Lichtquelle allen oder zumindest mehreren der Lichtleiter zugeordnet ist. Es kann aber auch vorgesehen sein, dass jedem Lichtleiter eine eigene Lichtquelle zugeordnet ist, und somit eine Mehrzahl von Lichtquellen das in die Lichteintrittsfläche eintretende Licht abstrahlen. Die Lichtquellen selbst können Leuchtdioden, die sich durch Sparsamkeit und Energieeffizienz auszeichnen, Halogenleuchten, oder aber andere konventionelle Lichtquellen mit kohärenter oder inkohärenter Strahlung im sichtbaren Spektralbereich sein.

In einer bevorzugten Ausführungsform der Erfindung umfasst die Lichtquelle einen Reflektor, welcher seinerseits wiederum in einer Ausführungsform einen Kalottenspiegel umfasst. Im Allgemeinen emittiert eine Lichtquelle auch in der vom Lichtleitelement abgewandten Richtung Licht. Durch einen derartigen Reflektor, welcher zusätzlich einen Kalottenspiegel aufweisen kann, wird es ermöglicht, auch die in dieser Richtung emittierte Strahlung zum Lichtleitelement umzulenken und zusätzlich dazu für eine Parallelisierung der eintretenden Strahlung zu sorgen. Mit weiteren Umlenkspiegeln und/oder Reflektoren kann dabei auch die in einer Richtung senkrecht zur Lichteintrittsfläche von der Lichtquelle emittierte Strahlung ebenfalls in Richtung Hauptachse umgelenkt werden.

In einer weiteren Ausführungsform der Erfindung ist vorgesehen, dass zwischen Lichtquelle und Lichteintrittsfläche des Lichtleitelements ein Linsensystem, also eine Anordnung einer oder mehrerer Linsen angeordnet ist. Diese Linsen haben die Aufgabe, die in das Lichtleitelement eintretende Strahlung bereits möglichst parallel zu machen und außerdem gewisse Abbildungsfehler zu vermeiden. Zu diesem Zweck kann es vorteilhaft sein, dass das Linsensystem einen Achromat umfasst.

Für eine erfindungsgemäße Beleuchtungseinrichtung kann es besonders wünschenswert sein, dass die Hell/Dunkelgrenze in einem gewissen Winkelbereich einstellbar oder variierbar ist. Dies trifft für eine Wandbeleuchtung zu, wo beispielsweise je nach Wanddekor die Hell/Dunkelgrenze variiert werden möchte, aber auch bei der Verwendung einer erfindungsgemäßen Beleuchtungseinrichtung als Schweinwerfer für ein Fahrzeug. Hierbei sollte das Maximum der Leuchtdichte bzw. auch das Maximum der Beleuchtungsstärke nicht genau in der Horizontalen liegen, sondern in einem Winkelbereich von etwa 0,1° bis 2° unterhalb der Horizontalen. Aus diesem Grund ist in einer bevorzugten Ausführungsform der Erfindung das Lichtleitelement um eine Achse drehbar und in einer verdrehten Position fixierbar. Dabei steht diese Achse vorzugsweise auf die Hauptachse und eine dazu senkrechte Vertikalachse senkrecht. Durch eine derartige Verdrehung des Lichtleitelements ist es möglich, einen bei horizontaler Ausrichtung des Lichtleitelements geradlinig durch das Lichtleitelement verlaufenden Strahls auszublenden und stattdessen Strahlen, die in Richtung von knapp unterhalb der Horizontalen verlaufen, möglichst ungestört passieren zu lassen. Des Weiteren kann es vorteilhaft sein, dass diese Verdrehung des Lichtleitelements variabel ist. Dies ist besonders dann wünschenswert, wenn sich durch Beladung des Kraftfahrzeugs die horizontale Ausrichtung des Scheinwerfers verändert und bei starker Zuladung das Maximum der Leuchtdichte bzw. Beleuchtungsstärke des ausgestrahlten Lichtes weiter nach unten gedreht werden muss.

Weitere Einzelheiten und Vorteile der vorliegenden Erfindung werden anhand der Figurenbeschreibung unter Bezugnahme auf die Zeichnungen im Folgenden näher erläutert.

Darin zeigt:
- Fig. 1a bis c: eine Seitenansicht, eine Draufsicht, und eine Vorderansicht einer erfindungsgemäßen Beleuchtungseinrichtung zur Illustration des gedachten Koordinatensystems,
- Fig. 2: die Anwendung einer erfindungsgemäßen Beleuchtungseinrichtung als Bühnenscheinwerfer mit ausgeblendetem Bereich und zusätzlichen ausgeleuchtetem Überkopfbereich,
- Fig. 3 bis 11: einen Vergleich einer Leuchtdichtekurve einer erfindungsgemäßen Beleuchtungseinrichtung in Form eines Fahrzeugscheinwerfers mit der Leuchtdichtekurve eines herkömmlichen Fahrzeugscheinwerfers nach dem Stand der Technik für verschiedene durch den Azimutwinkel ϕ gedachte C(ϕ)-Ebenen,
- Fig. 12a bis c: schematische Darstellungen der Verwendung einer erfindungsgemäßen Beleuchtungseinrichtung zur Ausleuchtung einer Innenwand mit einer zugehörigen Leuchtdichtekurve,
- Fig. 13a und b: eine schematische Darstellung der Verwendung einer erfindungsgemäßen Beleuchtungseinrichtung zur Ausleuchtung eines Sportplatzes mit einer zugehörigen Leuchtdichtekurve,
- Fig. 14a und b: eine schematische Darstellung der Verwendung einer erfindungsgemäßen Beleuchtungseinrichtung als Straßenbeleuchtung mit einer zugehörigen Leuchtdichtekurve,
- Fig. 15a bis c: einen Querschnitt einer Beleuchtungseinrichtung mit einem erfindungsgemäßen Lichtleitelement sowie zwei perspektivische Darstellungen verschiedener Ausführungsformen eines erfindungsgemäßen Lichtleitelements,
- Fig. 16a und b: einen Querschnitt einer weiteren Ausführungsform einer erfindungsgemäßen Beleuchtungseinrichtung und eine perspektivische Ansicht des dazugehörigen Lichtleitelements,
- Fig. 17a und b: einen Querschnitt einer weiteren Ausführungsform einer Ansicht des dazugehörigen Lichtleitelements,
- Fig. 18a und b: einen Querschnitt einer weiteren Ausführungsform einer erfindungsgemäßen Beleuchtungseinrichtung und eine perspektivische Ansicht des dazugehörigen Lichtleitelements,
- Fig. 19a und b: einen Querschnitt in vertikaler Richtung sowie einen Querschnitt in horizontaler Richtung zur Darstellung des Funktionsprinzips einer Ausführungsform einer erfindungsgemäßen Beleuchtungseinrichtung,
- Fig. 20: einen Querschnitt in Vertikalrichtung zur Darstellung des Funktionsprinzips einer weiteren Ausführungsform einer erfindungsgemäßen Beleuchtungseinrichtung,
- Fig. 21: einen Querschnitt in Vertikalrichtung zur Darstellung des Funktionsprinzips einer weiteren Ausführungsform einer erfindungsgemäßen Beleuchtungseinrichtung,
- Fig. 22a bis c: einen Querschnitt durch drei Ausführungsformen von Lichtleitern eines erfindungsgemäßen Lichtleitelements,
- Fig. 23a und b: zwei Detailansichten des Querschnitts von zwei Ausführungsformen von Lichtleitern des erfindungsgemäßen Lichtleitelements, und
- Fig. 24: eine Darstellung des Strahlengangs wichtiger Strahlen durch einen Lichtleiter eines erfindungsgemäßen Lichtleitelements zur Illustrierung des Funktionsprinzips.

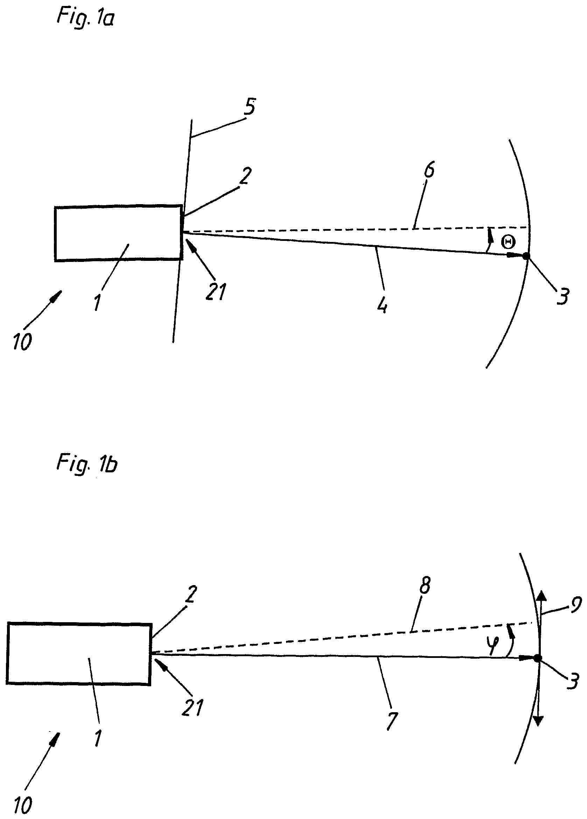

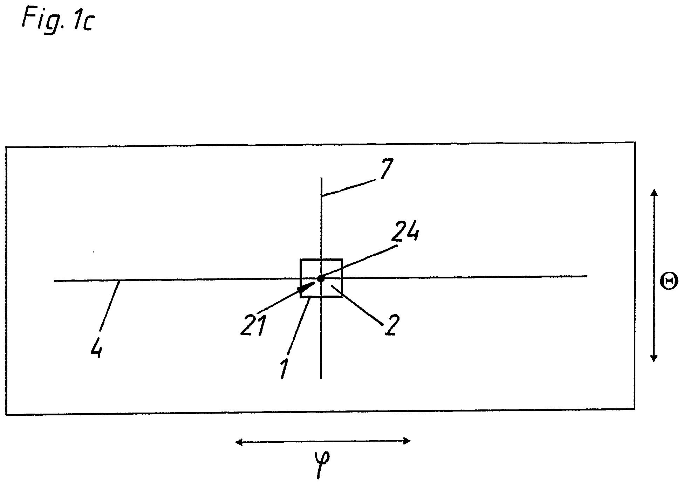

In Fig. 1a ist eine Seitenansicht einer erfindungsgemäßen Beleuchtungseinrichtung 10 mit einer Vorrichtung 1, die die mindestens eine Lichtquelle enthält und eine Lichtaustrittsfläche 2 aufweist, zu sehen. Im geometrischen Zentrum 21 der Lichtaustrittsfläche 2 ist der Ursprung des Koordinatensystems angeordnet, mit welchem eine gemessene Leuchtdichteverteilung und eine gemessene Lichtstärkeverteilung beschrieben wird. Die durch den Polarwinkel von 0° gedachte Hauptebene 4 enthält die Hauptgerade 24 die ausgehend vom Ursprung des Koordinatensystems in Richtung des Maximums 3 der Lichtstärkeverteilung zeigt, wobei nur jene Hälfte der Hauptgeraden 24 relevant ist, die von der Lichtaustrittsfläche 2 weg in jene Richtung zeigt, in die das von der oder den Lichtquelle(n) emittierte Licht durch die Lichtaustrittsfläche 2 durchtritt. In einem kartesischen Koordinatensystem würde die Hauptebene 4 der x-y-Ebene entsprechen. Senkrecht zur Hauptebene 4 ist die Ebene 5 angeordnet, welche durch den Azimutwinkel von 90° gegeben ist, entsprechend der y-z-Ebene in einem kartesischen Koordinatensystem. In diesem Ausführungsbeispiel der Erfindung liegt die Horizontalebene 6 durch den Ursprung des gedachten Koordinatensystems bei einem Polarwinkel Θ oberhalb der Hauptebene 4. Da die Leuchtdichte L unabhängig vom Abstand vom Zentrum 21 der Lichtaustrittsfläche 2 ist, sind Kugelkoordinaten am besten zur Charakterisierung der Leuchtdichteverteilung geeignet. Der Kreisbogen in Fig. 1 a stellt daher den Schnitt eines Teils einer Kugeloberfläche dar, die wiederum einen bestimmten Raumwinkelbereich definiert. Für die Leuchtdichte L ist die in eine bestimmte Richtung und einen bestimmten Raumwinkelbereich abgestrahlte Lichtleistung bezogen auf die Fläche A der Lichtaustrittsfläche 2 unter Berücksichtigung der spektralen Empfindlichkeitskurve des Auges relevant.

Figur 1b zeigt eine Draufsicht auf die Beleuchtungseinrichtung 10 der Fig. 1a. In dieser Draufsicht ist zu erkennen wie mittels eines Azimutwinkels ϕ der letzte Freiheitsgrad des gedachten Koordinatensystems, das im Zentrum 21 der Lichtaustrittsfläche 2 angeordnet ist, festgelegt wird. Der Doppelpfeil 9 signalisiert jene Richtung von der aus die Lichtstärke I von der Richtung ihres Maximums 3 ausgehend am geringsten abnimmt. Durch diese Richtung der geringsten Abnahme der Lichtstärke I ausgehend vom Maximum 3 der Lichtstärke ist die Hauptebene 4 festgelegt, dh ausgehend vom Durchstoßpunkt der Hauptgeraden 24 in einer Orthogonalebene auf die Hauptgerade 24 weist die Lichtstärke in Richtung der Hauptebene 4, bzw. in Richtung einer Schnittgerade der Hauptebene 4 mit einer Orthogonalebene der Hauptgeraden 24, den geringsten Rückgang bzw. die geringste Rückgangsrate auf.

Senkrecht auf die Hauptebene 4 sind die durch den Azimutwinkel ϕ gegebenen C(ϕ)-Ebenen 8 angeordnet, wobei die Ebene 7 durch die Hauptgerade 24, also die Richtung des Maximums 3 der Lichtstärkeverteilung gegeben ist und den Azimutwinkel von 0° festlegt. In der Fig. 1 b ist eine weitere auf die Hauptebene 4 senkrechte, durch den Azimutwinkel ϕ gegebene C(ϕ)-Ebene 8 dargestellt. Die erfindungsgemäße Beleuchtungseinrichtung 10 zeichnet sich nun dadurch aus, dass die Leuchtdichteverteilung in der Ebene 7 eine Leuchtdichtekurve ausbildet, wobei, ausgehend vom Maximum 3 der Lichtstärkeverteilung, die Leuchtdichte innerhalb eines Polarwinkelbereichs von 3°, beispielsweise also zwischen den Polarwinkeln von 2° und 5° (in der Ebene 7), um mindestens 90% gegenüber des Wertes den die Leuchtdichte L in Richtung der Hauptgeraden 24, also in Richtung des Maximums 3 der Lichtstärkeverteilung aufweist, abnimmt. Es kann zusätzlich vorgesehen sein, dass in einem Polarwinkelbereich von 1° die Leuchtdichte L um mindestens 60%, vorzugsweise mindestens 70%, gegenüber dem Wert den die Leuchtdichte L in Richtung der Hauptgeraden 24 aufweist, abnimmt.

Figur 1c zeigt eine Vorderansicht in Richtung der Lichtaustrittsfläche 2 der erfindungsgemäßen Beleuchtungseinrichtung 10 aus den Fig. 1a und 1 b. Hier ist nochmals die durch den Polarwinkel von 0° gedachte Hauptebene 4 dargestellt und die senkrecht dazu angeordnete, durch den Azimutwinkel von 0° gedachte Ebene 7, die in einem kartesischen Koordinatensystem der x-y-Ebene bzw. der x-z-Ebene entsprechen würde. Die Schnittgerade der Ebenen 4 und 7 zeigt ausgehend vom Zentrum 21 der Lichtaustrittsfläche 2 in Richtung des Maximums 3 der Lichtstärkeverteilung und entspricht daher der Hauptgeraden 24. Betrachtet man nun, wie die Lichtstärke I in einer Ebene senkrecht auf die Hauptgerade 24, also beispielsweise in der dargestellten Zeichenebene, ausgehend vom Durchstoßpunkt der Hauptgerade 24 in dieser Ebene abnimmt, so weist die Hauptebene 4 in jene Richtung, in der dieser Rückgang bzw. die Rückgangsrate am schwächsten ausfällt.

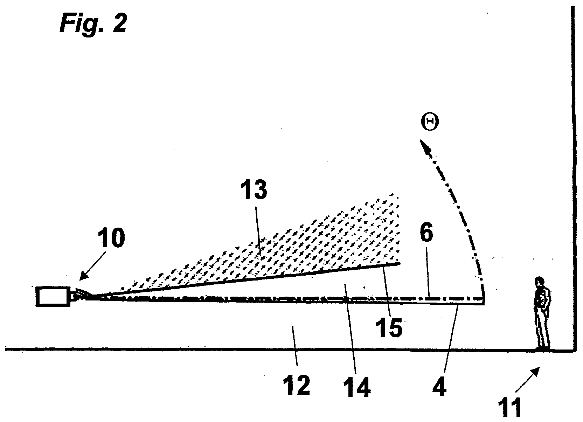

Figur 2 zeigt nun eine erste Anwendungsmöglichkeit einer erfindungsgemäßen Beleuchtungseinrichtung 10 als Bühnenscheinwerfer auf einer Bühne 11. Die Beleuchtungseinrichtung 10 ist derart ausgebildet und angeordnet, dass die Hauptebene 4 knapp unterhalb der Horizontalebene 6 liegt, wobei die Horizontalebene 6 in dem gedachten Koordinatensystem bei einem Polarwinkelbereich von etwa 1° angeordnet ist. Innerhalb eines Polarwinkelbereich von weniger als 1°, ausgehend von der Richtung des Maximums 3 der Lichtstärkeverteilung, die in der Hauptebene 4 liegt, nimmt die Leuchtdichte L bereits derart stark ab, dass die Hauptebene 4 bereits annähernd als erfindungsgemäße Hell-/Dunkelgrenze 25 angesehen werden kann. Zwischen der Hauptebene 4 und einer weiteren Hell-/Dunkelgrenze 15 weist die Leuchtdichte L nur geringe Werte auf, sodass der Bereich 14 ausgeblendet wird, während der Bereich negativer Polarwinkelbereich entsprechend der Notwendigkeiten im Bühnenbereich mit hoher Leuchtdichte L ausgeleuchtet wird, um eine sehr gute Erkennbarkeit des Bühnenbodens zu gewährleisten. Zusätzlich sind dort auch sehr hohe Lichtstärkewerte vorhanden. Eine weitere Hell-/Dunkeigrenze 15 ist bei einem Polarwinkelbereich von 7° angeordnet, wobei der oberhalb der Hell-/Dunkelgrenze 15 angeordnete Bereich 13 zusätzlich ausgeleuchtet ist, um weitere Bereiche der Bühne auszuleuchten und damit erkennbar zu machen. Das menschliche Gesichtsfeld ist dabei zumeist in einem Polarwinkelbereich zwischen 2° und 5° und damit im ausgeblendeten Bereich 14 angeordnet. Dadurch kann eine Blendung der Schauspieler verhindert werden. Die hier dargestellten Leuchtdichteverhältnisse mit dem ausgeblendeten Bereich 14 und dem zusätzlich ausgeleuchteten Überkopfbereich 13 gelten nicht nur für die durch den Azimutwinkel von 0° gedachte Ebene 7, sondern für einen ganzen Bereich von C(ϕ)-Ebenen in einem Bereich um den Azimutwinkel von 0°, sodass der gesamte Bühnenbereich der Bühne 11 von der erfindungsgemäßen Beleuchtungseinrichtung 10 blendfrei beleuchtet werden kann.

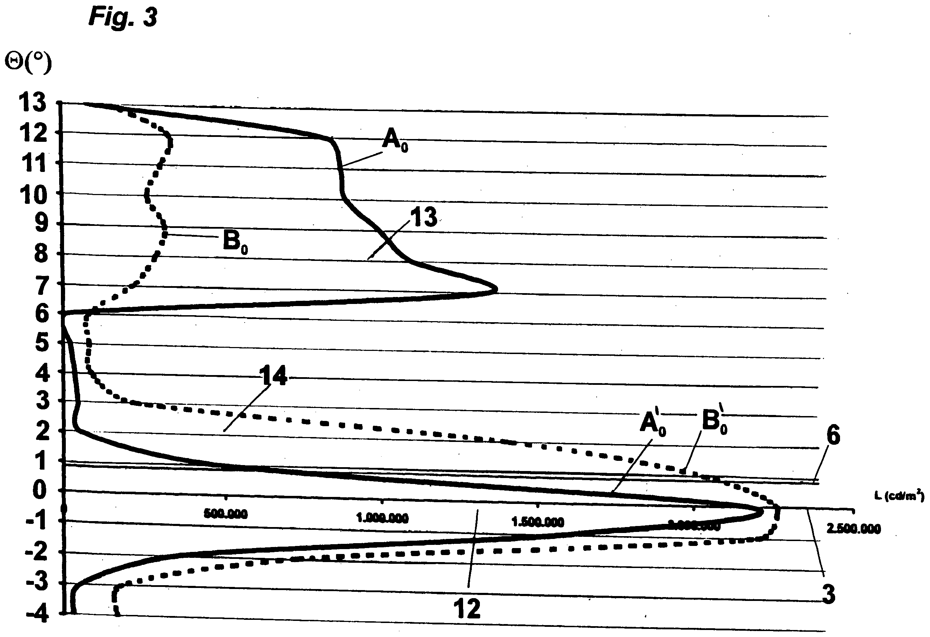

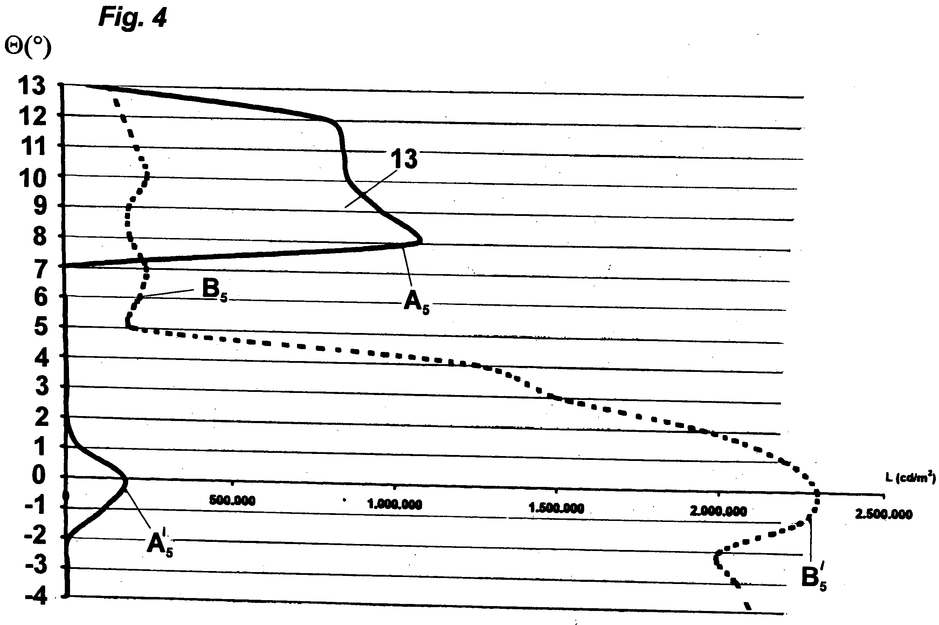

Figur 3 zeigt einen Vergleich einer Leuchtdichtekurve A₀, A₀' einer erfindungsgemäßen Beleuchtungseinrichtung 10, die als Frontscheinwerfer eines Fahrzeugs verwendet wird, mit einer Leuchtdichtekurve B₀, B₀' eines herkömmlichen Frontscheinwerfers eines Fahrzeugs. In Fig. 3 sind dabei diese Leuchtdichtekurven in der durch den Azimutwinkel von 0° gedachten Ebene C(0°) dargestellt. Die Darstellung der Leuchtdichtekurven in der Ebene C(0°) erfolgt hier, ebenso wie in den anderen C(ϕ)-Ebenen in den Fig. 4 bis 11, in Form eines Funktionsgrafen in einem kartesischen Koordinatensystem, wobei auf der Abszisse die Leuchtdichte L in Einheiten von Candela pro Quadratmeter und auf der Ordinate der Polarwinkel θ in Einheiten von Grad angegeben ist. Wie in Fig. 3 erkennbar ist, liegt die Horizontalebene 6 bei einem Polarwinkel von etwa 1°. Die Leuchtdichtekurve A₀, A₀' der erfindungsgemäßen Beleuchtungseinrichtung 10 ist hier als durchgezogene Linie dargestellt, während die Leuchtdichtekurve B₀, B₀' eines herkömmlichen Frontscheinwerfers eines Kraftfahrzeugs punktiert dargestellt ist. Diese Darstellungsweise wird auch in den Fig. 4 bis 11 gewählt.

Während in Richtung des Maximums 3 der Lichtstärkeverteilung die Leuchtdichte L der Beleuchtungseinrichtung 10 einen Wert L₀ von in etwa 2,265 Mio. cd/m² aufweist, was in etwa mit dem entsprechenden Wert der Leuchtdichte eines herkömmlichen Scheinwerfers vergleichbar ist und ein lokales Maximum der Leuchtdichte L in der Ebene 7 darstellt, nimmt die Leuchtdichte L innerhalb des durch die Polarwinkel von 0° und 1° gegebenen Bereichs auf einen Wert von 468.000 cd/m², und somit um mehr als 75% von L₀. Der Index 0 in L₀ bezieht sich dabei auf den Azimutwinkel ϕ von 0°. Im Folgenden bezieht sich der Index ϕ bei einem Leuchtdichtenwerte L_{ϕ}, auf den jeweiligen Azimutwinkel ϕ der C(ϕ)-Ebene, sodass L_{ϕ} jeweils den Wert der Leuchtdichte in Richtung des Polarwinkels von 0° in der C(ϕ)-Ebene bezeichnet. Durch diese massive Abnahme der Leuchtdichte L wird somit eine ausgeprägte Hell-/Dunkelgrenze 25 realisiert. Bis zum Polarwinkel von 3° hat die Leuchtdichte bis auf einen Wert von 44.100 cd/m² und somit auf ca. 2% von L₀ abgenommen. Demgegenüber beträgt der größte Rückgang innerhalb eines Polarwinkelbereichs von 1° des herkömmlichen Scheinwerfers nur ca. 50% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 85% des Wertes der Leuchtdichte beim Polarwinkel von 0°. Im gesamten Bereich 14 zwischen den Polarwinkeln von 2° und 5° ist die Leuchtdichte L der Beleuchtungseinrichtung 10 geringer als jene eines herkömmlichen Scheinwerfers. Daher bildet die erfindungsgemäße Beleuchtungseinrichtung 10 daher einen ausgeblendeten und somit blendfreien Bereich 14 mit sehr geringer Leuchtdichte, wobei dort die Leuchtdichte bis auf Werte von ca. 22.000 cd/m² abnimmt, im Bereich zwischen 2° und 6° sogar auf in etwa 15.000 cd/m². Dagegen beschreibt der Bereich A₀' der Leuchtdichtekurve jenen Bereich 12 hoher Leuchtdichtewerte, der die Straße ausleuchtet. Im Bereich A₀ bei einem Polarwinkel von mehr als 6° nimmt die Leuchtdichte wieder auf einen Wert von mehr als Hälfte des Referenzwertes L₀ der Leuchtdichte L, nämlich auf ca. 1,4 Mio. cd/m², zu und bildet daher einen zusätzlich ausgeleuchteten Bereich 13, damit Verkehrsschilder und Überkopfschilder besonders gut erkennbar sind. Dagegen ist die Zunahme der Leuchtdichte L in einem Bereich B₀ der Leuchtdichtekurve eines herkömmlichen Scheinwerfers nur sehr schwach ausgeprägt und kann nicht dazu dienen, Verkehrsschilder besser zu erkennen.

Figur 4 zeigt die entsprechenden Leuchtdichtekurven A₅, A₅' sowie B₅, B₅' in der durch den Azimutwinkel von 5° gedachten Ebene C(5°). Während herkömmliche Scheinwerfer in einem großen Bereich von Polarwinkeln über sehr hohe Leuchtdichten L verfügen, die allerdings für die Verkehrssicherheit nicht dienlich sind, da sie ja nur seitliche Bereiche betreffen und damit nur den entgegenkommenden Gegenverkehr blenden, weist die Leuchtdichtekurve in der Ebene C(5°) einer erfindungsgemäßen Beleuchtungseinrichtung 10 bei einem Polarwinkel von 0° einen Wert L₅ von 175.000. cd/m² auf, der ein lokales Maximum der Leuchtdichtekurve in der Ebene C(5°) darstellt. Innerhalb des durch die Polarwinkel von 0° und 1° gegebenen Bereichs nimmt die Leuchtdichte L der erfindungsgemäßen Beleuchtungseinrichtung um mehr als 75% von L₅ auf einen Wert von ca. 40.000 cd/m² ab und bildet dadurch eine ausgeprägte Hell-/Dunkelgrenze 25 in der Ebene C(5°). Bei einem Polarwinkel von 3° beträgt die Leuchtdichte nur noch 4.000 cd/m², sodass der Rückgang innerhalb des durch die Polarwinkel von 0° und 3° gegebenen Bereichs mehr als 97% von L₅ beträgt. Demgegenüber beträgt der größte Rückgang innerhalb eines Polarwinkelbereichs von 1° in der C(5°)-Ebene des herkömmlichen Scheinwerfers nur ca. 45% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 75% der Leuchtdichte beim Polarwinkel von 0°.

Zusätzlich dazu wird bei der erfindungsgemäßen Beleuchtungseinrichtung 10 der Polarwinkelbereich zwischen 2° und 5° effektiv ausgeblendet, indem die Leuchtdichte dort auf sehr niedrige Werte von ca. 1300 cd/m² abfällt, während sie dann bei einem Polarwinkel von etwa 8° auf mehr als eine Mio. cd/m² ansteigt und damit einen zusätzlich ausgeleuchteten Bereich 13 schafft, mit dem seitlich angeordnete Verkehrsschilder oder Überkopfschilder effektiv beleuchtet werden können, ohne dabei entgegenkommende Verkehrsteilnehmer zu blenden, deren Gesichtsfeld hauptsächlich im Winkelbereich zwischen 2 und 6° angeordnet ist.

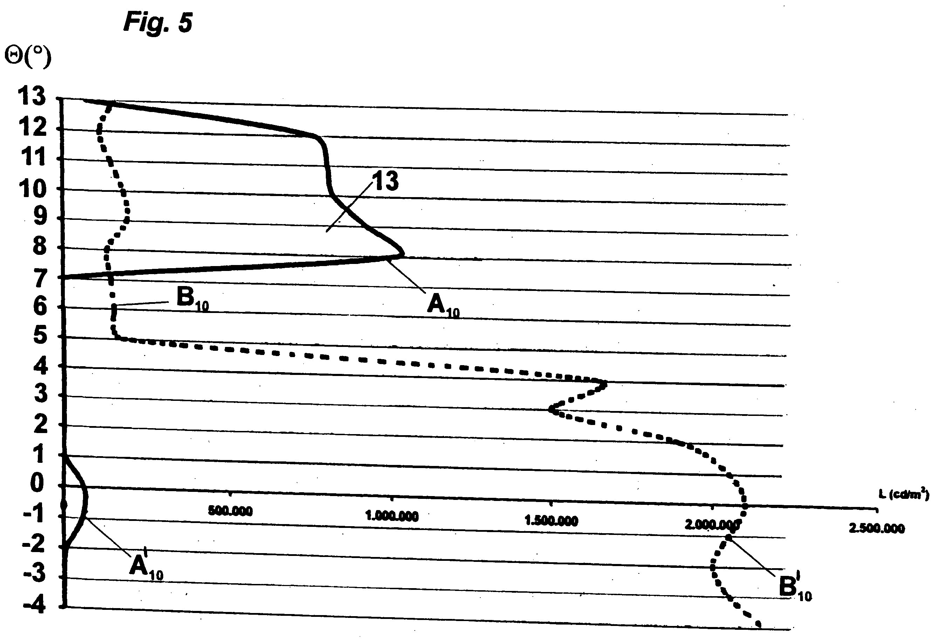

Ein ähnliches Bild zeigt Fig. 5, wo die entsprechenden Leuchtdichtekurven in der durch den Azimutwinkel von 10° gedachten Ebene C (10°) dargestellt sind. Die Leuchtdichte L in Richtung des Polarwinkels von 0° stellt ein lokales Maximum der Leuchtdichtekurve A₁₀' dar und erreicht einen Wert L₁₀ von in etwa 60.000 cd/m², während herkömmliche Scheinwerfer hier immer noch Werte über 2 Mio. cd/m², was zu einer starken Blendwirkung für den Gegenverkehr führen kann, insbesondere deshalb, weil sie für Polarwinkel zwischen 2 und 5° keinen ausgeblendeten Bereich vorsehen, sondern auch dort sehr hohe Leuchtdichten aufweisen. Innerhalb des durch die Polarwinkel von 0° und 1° gegebenen Bereichs nimmt die Leuchtdichte L der erfindungsgemäßen Beleuchtungseinrichtung um mehr als 90% von L₁₀ auf einen Wert von ca. 3.400 cd/m² ab und bildet dadurch eine ausgeprägte Hell-/Dunkeigrenze 25 in der Ebene C(10°). Bei einem Polarwinkel von 3° beträgt die Leuchtdichte nur noch 1.000 cd/m², sodass der Rückgang innerhalb des durch die Polarwinkel von 0° und 3° gegebenen Bereichs mehr als 98% von L₁₀ beträgt. Demgegenüber beträgt der größte Rückgang innerhalb eines Polarwinkelbereichs von 1° in der C(10°)-Ebene des herkömmlichen Scheinwerfers nur ca. 70% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 82% der Leuchtdichte beim Polarwinkel von 0°.

Wiederum ist für Polarwinkel zwischen 2° und 5° die Leuchtdichte der erfindungsgemäßen Beleuchtungseinrichtung 10 sehr gering und nimmt dort auf ca. 600 cd/m² ab, während für Polarwinkel über 7° ein zusätzlich ausgeleuchteter Bereich 13 vorzufinden ist, wobei die Leuchtdichte bis auf einen Wert von über 1 Mio. cd/m² bei einem Polarwinkel von ca. 8° ansteigt.

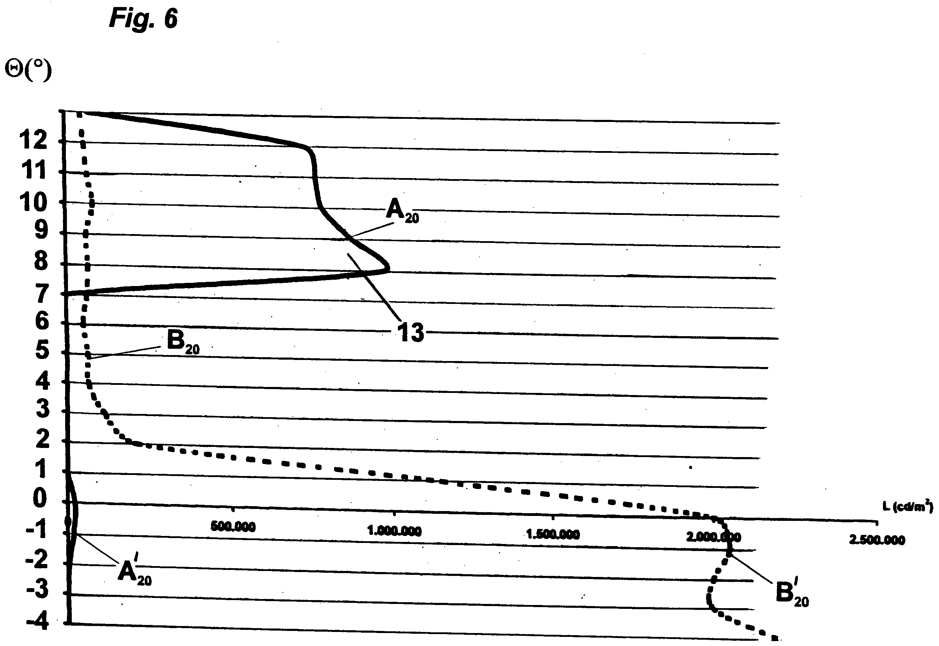

Ein ähnliches Bild zeigt Fig. 6, die die Leuchtdichtekurven in der durch den Azimutwinkel von 20° gedachten Ebene C(20°) darstellt. Die Leuchtdichte L in Richtung des Polarwinkels von 0° stellt ein lokales Maximum der Leuchtdichtekurve A₂₀' in dieser Ebene C(20°) dar und weist einen Wert L₂₀ von etwas mehr als 21.000 cd/m² auf, während die Leuchtdichte L im zusätzlich ausgeleuchteten Bereich 13 der Leuchtdichtekurve A₂₀ bei einem Polarwinkel von 8° auf einen Wert von über 950.000 cd/m² ansteigt. Innerhalb des durch die Polarwinkel von 0° und 1° gegebenen Bereichs nimmt die Leuchtdichte L der erfindungsgemäßen Beleuchtungseinrichtung um mehr als 90% von L₂₀ auf einen Wert von ca. 1.200 cd/m² ab und bildet dadurch eine ausgeprägte Hell-/Dunkelgrenze 25 in der Ebene C(20°). Bei einem Polarwinkel von 3° beträgt die Leuchtdichte nur noch 350 cd/m², sodass der Rückgang innerhalb des durch die Polarwinkel von 0° und 3° gegebenen Bereichs mehr als 98% von L₂₀ beträgt. Demgegenüber beträgt der größte Rückgang innerhalb eines Polarwinkelbereichs von 1° in der C(20°)-Ebene des herkömmlichen Scheinwerfers nur ca. 47% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 94% der Leuchtdichte beim Polarwinkel von 0°. Im Polarwinkelbereich zwischen 2° und 5° reduziert sich die Leuchtdichte der erfindungsgemäßen Beleuchtungseinrichtung 10 auf einen Wert von 230 cd/m².

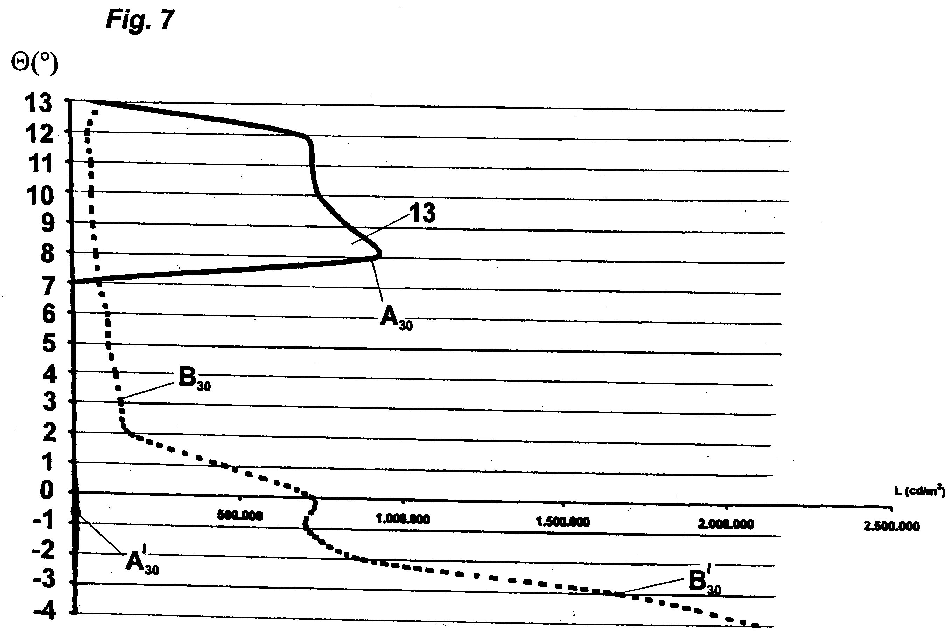

Figur 7 zeigt die entsprechenden Leuchtdichtkurven A₃₀, A₃₀' einer erfindungsgemäßen Beleuchtungseinrichtung 10 im Vergleich zur Leuchtdichtegruppe B₃₀ eines herkömmlichen Frontscheinwerfers eines Fahrzeugs, in der durch den Azimutwinkel von 30° gedachten Ebene C(30°). Die Leuchtdichte L in Richtung des Polarwinkels von 0° stellt ein lokales Maximum im Bereich A₃₀' dar und weist einen Wert L₃₀ von 7.250 cd/m² auf. Innerhalb des durch die Polarwinkel von 0° und 1° gegebenen Bereichs nimmt die Leuchtdichte L der erfindungsgemäßen Beleuchtungseinrichtung um mehr als 95% von L₃₀ auf einen Wert von ca. 360 cd/m² ab und bildet dadurch eine ausgeprägte Hell-/Dunkelgrenze 25 in der Ebene C(30°). Bei einem Polarwinkel von 3° beträgt die Leuchtdichte nur noch 190 cd/m², sodass der Rückgang innerhalb des durch die Polarwinkeln von 0° und 3° gegebenen Bereichs mehr als 97% von L₃₀ beträgt. Demgegenüber beträgt der größte Rückgang innerhalb eines Polarwinkelbereichs von 1° in der C(30°)-Ebene des herkömmlichen Scheinwerfers nur ca. 37% des Wertes, den die Leuchtdichte des herkömmlichen Scheinwerfers bei einem Polarwinkel von 0° erreicht. Im Polarwinkelbereich zwischen 2° und 7° nimmt die Leuchtdichte L der erfindungsgemäßen Beleuchtungseinrichtung 10 auf einen Wert von 105 cd/m² ab, um dann zur Ausbildung eines zusätzlich ausgeleuchteten Bereiches 13 bei einem Polarwinkel von 8° wieder auf einen Wert von 920.000 cd/m² anzusteigen.

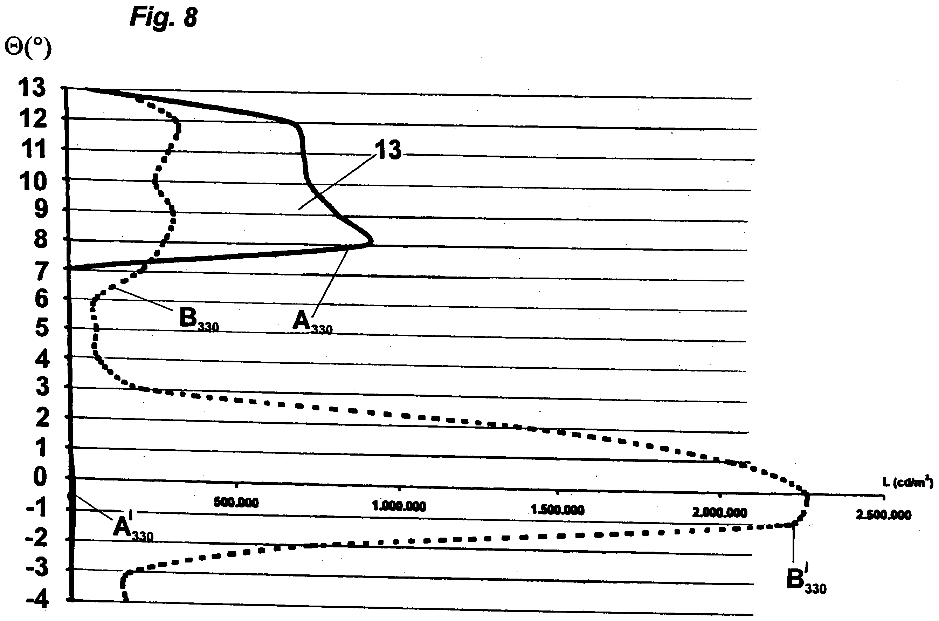

In der ausgehend von der C(0°)-Ebene 7 anderen Richtung, welche in diesem Ausführungsbeispiel der Erfindung in Fahrtrichtung des Kraftfahrzeugs rechts von der C(0°)-Ebene 7 liegt, liegt eine ähnliche Leuchtdichterteilung vor. In Fig. 8 sind die Leuchtdichtekurven für die durch den Azimutwinkel von 330°, d.h. -30° dargestellt. Die Leuchtdichte L in Richtung des Polarwinkels von 0° stellt ein lokales Maximum der Kurve A₃₃₀' dar und weist einen Wert L₃₃₀ von in etwa 6.900 cd/m² auf. Innerhalb des durch die Polarwinkel von 0° und 1 gegebenen Bereichs nimmt die Leuchtdichte L der erfindungsgemäßen Beleuchtungseinrichtung um mehr als 95% von L₃₃₀ auf einen Wert von ca. 340 cd/m² ab und bildet dadurch eine ausgeprägte Hell-/Dunkeigrenze 25 in der Ebene C(330°). Bei einem Polarwinkel von 3° beträgt die Leuchtdichte nur noch 180 cd/m², sodass der Rückgang innerhalb des durch die Polarwinkel von 0° und 3° gegebenen Bereichs mehr als 97% von L₃₃₀ beträgt. Demgegenüber beträgt der größte Rückgang innerhalb eines Polarwinkelbereichs von 1° in der C(330°)-Ebene des herkömmlichen Scheinwerfers nur ca. 37% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 90% der Leuchtdichte beim Polarwinkel von 0°.

Im Polarwinkelbereich zwischen 1 und 7° ist die Ausleuchtung sehr schwach und die Leuchtdichte L der Beleuchtungseinrichtung 10 reduziert sich auf einen Wert von 100 cd/m², um danach ab einem Polarwinkel von 7° zur Ausbildung eines zusätzlich ausgeleuchteten Bereiches 13 auf einen Wert von mehr als 900.000 cd/m² bei einem Polarwinkel von 8° anzusteigen. Demgegenüber weist die Leuchtdichtekurve B₃₃₀ eines herkömmlichen Scheinwerfers keine zusätzliche effektive Ausleuchtung auf.

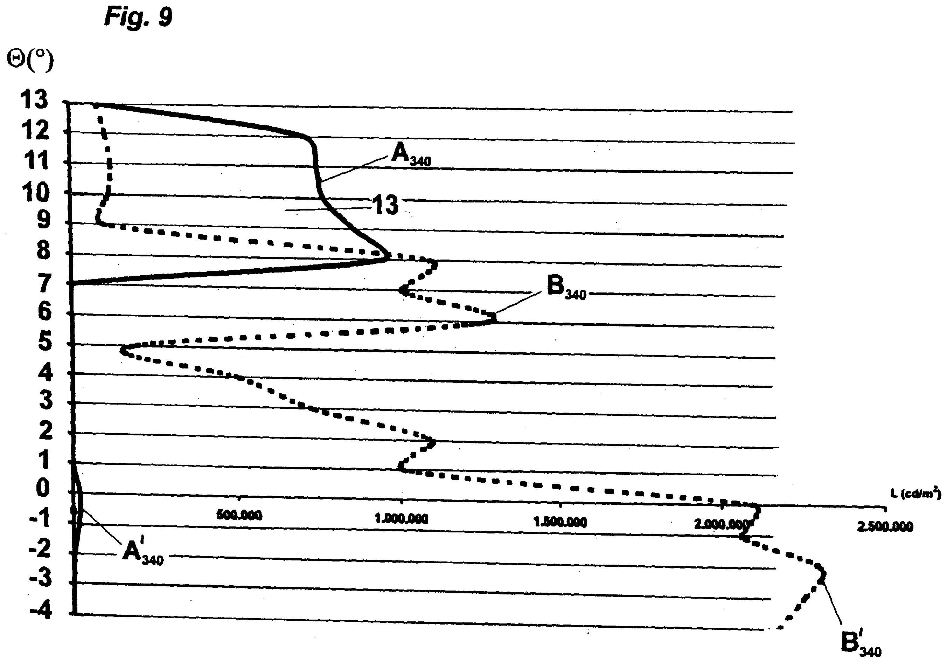

Figur 9 zeigt die Verhältnisse in der C(340°) Ebene von einem Azimutwinkel von 340°, d.h. -20°. Die Leuchtdichte L in Richtung des Polarwinkels von 0° stellt ein lokales Maximum der Kurve A₃₄₀' dar und weist einen Wert L₃₄₀ von in etwa 20.500 cd/m² auf. Innerhalb des durch die Polarwinkel von 0° und 1° gegebenen Bereichs nimmt die Leuchtdichte L der erfindungsgemäßen Beleuchtungseinrichtung um mehr als 90% von L₃₄₀ auf einen Wert von ca. 1200 cd/m² ab und bildet dadurch eine ausgeprägte Hell-/Dunkelgrenze 25 in der Ebene C(340°). Bei einem Polarwinkel von 3° beträgt die Leuchtdichte nur noch 330 cd/m², sodass der Rückgang innerhalb des durch die Polarwinkel von 0° und 3° gegebenen Bereichs mehr als 98% von L₃₄₀ beträgt. Demgegenüber beträgt der größte Rückgang innerhalb eines Polarwinkelbereichs von 1° in der C(340°)-Ebene des herkömmlichen Scheinwerfers nur ca. 50% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 65% der Leuchtdichte beim Polarwinkel von 0°. Im Polarwinkelbereich zwischen 2° und 7° nimmt die Leuchtdichte L auf einen Wert von 190 cd/m² ab und steigt dann rapide auf einen Wert von mehr als 950.000 cd/m² bei einem Polarwinkel von 8° an, wodurch unter Ausbildung einer stark ausgeprägten Hell-/Dunkelgrenze 15 ein zusätzlich ausgeleuchteter Bereich 13 entsteht.

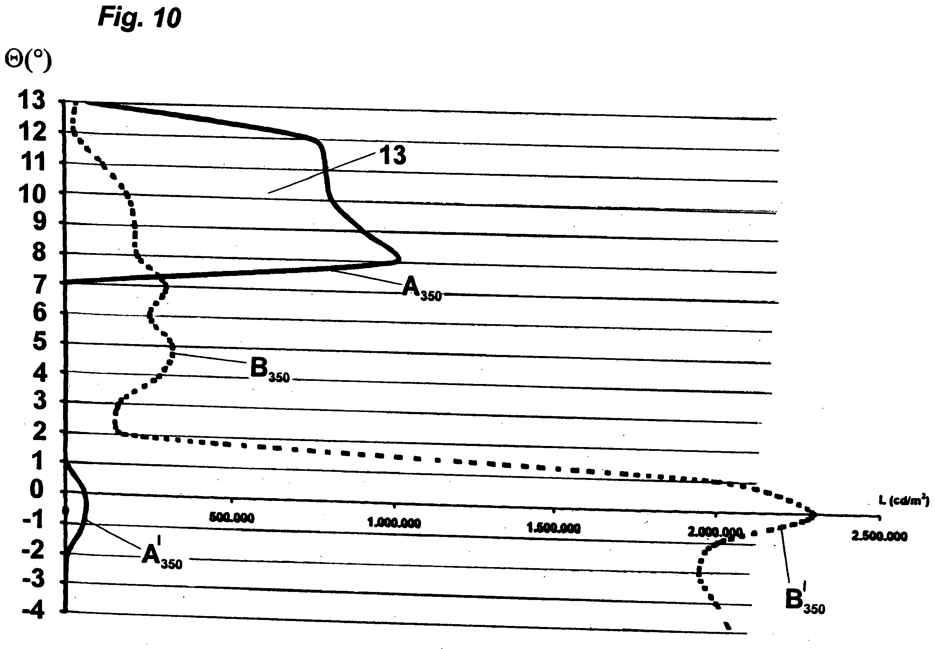

Die Leuchtdichtekurven A₃₅₀, A₃₅₀' bzw. B₃₅₀ und B₃₅₀' zeigen in Fig. 10 den Vergleich der Leuchtdichtekurven einer erfindungsgemäßen Beleuchtungseinrichtung 10 mit einem herkömmlichen Frontscheinwerfer eines Fahrzeugs, in der durch den Azimutwinkel von 350°, d.h. -10° gedachten Ebene C(350°). Die Leuchtdichte L in Richtung des Polarwinkels von 0° stellt ein lokales Maximum der Leuchtdichtekurve A₃₅₀' in dieser Ebene dar und erreicht einen Wert L₃₅₀ von 57.000 cd/m². Innerhalb des durch die Polarwinkel von 0° und 1° gegebenen Bereichs nimmt die Leuchtdichte L der erfindungsgemäßen Beleuchtungseinrichtung um mehr als 90% von L₃₅₀ auf einen Wert von ca. 3.300 cd/m² ab und bildet dadurch eine ausgeprägte Hell-/Dunkelgrenze 25 in der Ebene C(350°). Bei einem Polarwinkel von 3° beträgt die Leuchtdichte nur noch ca. 1000 cd/m², sodass der Rückgang innerhalb des durch die Polarwinkel von 0° und 3° gegebenen Bereichs mehr als 98% von L₃₅₀ beträgt. Demgegenüber beträgt der größte Rückgang innerhalb eines Polarwinkelbereichs von 1° in der C(350°)-Ebene des herkömmlichen Scheinwerfers nur ca. 80% des Wertes, den die Leuchtdichte des herkömmlichen Scheinwerfers bei einem Polarwinkel von 0° erreicht. Der stärkste Rückgang der Leuchtdichte des herkömmlichen Scheinwerfers innerhalb von 3° beträgt ca. 90% der Leuchtdichte beim Polarwinkel. von 0°.

Der Polarwinkelbereich zwischen 2° und 7° ist effektiv ausgeblendet, indem dort die Leuchtdichte L der Beleuchtungseinrichtung 10 sehr gering ist und in einem Polarwinkelbereich zwischen 2° und 5° auf einen Wert von 610 cd/m² abfällt. Eine stark ausgeprägte Hell-/Dunkelgrenze 15 bildet die Grenze zum zusätzlich ausgeleuchteten Bereich 13, indem die Leuchtdichte auf einen Wert von 1 Mio. cd/m² bei einem Polarwinkel von 8° ansteigt.

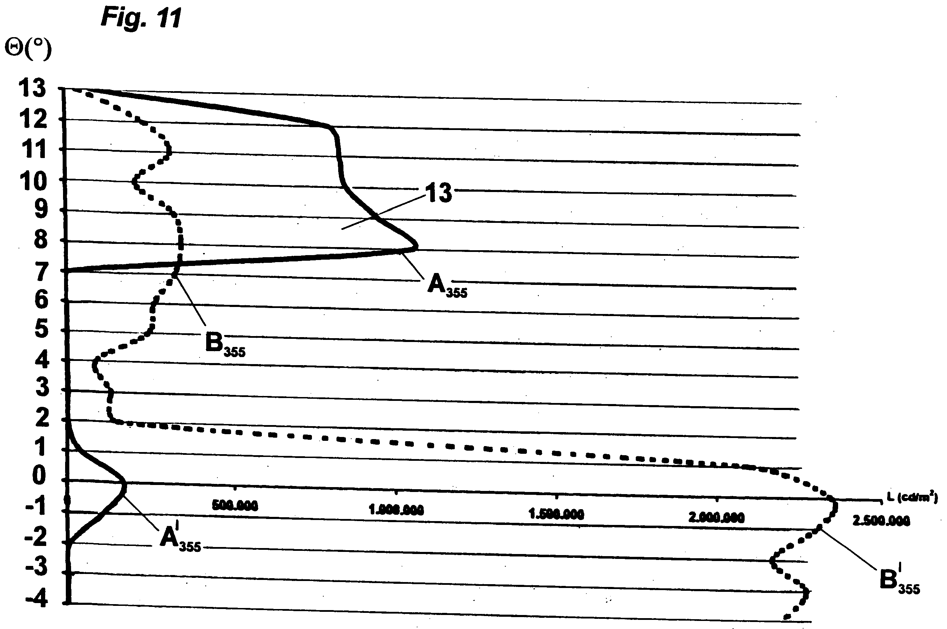

In Fig. 11 schließlich ist diese Situation in der durch den Azimutwinkel von 355°, d.h. - 5° dargestellten Ebene C (355°) dargestellt. Die Leuchtdichte L in Richtung des Polarwinkels von 0° stellt ein lokales Maximum der Leuchtdichtekurve A₃₅₅' in dieser Ebene dar, und weist einen Wert L₃₅₅ von in etwa 167.000 cd/m² auf. Innerhalb des durch die Polarwinkel von 0° und 1 gegebenen Bereichs nimmt die Leuchtdichte L der erfindungsgemäßen Beleuchtungseinrichtung um mehr als 75% von L₃₅₅ auf einen Wert von ca. 38.000 cd/m² ab und bildet dadurch eine ausgeprägte Hell-/Dunkelgrenze 25 in der Ebene C(355°). Bei einem Polarwinkel von 3° beträgt die Leuchtdichte nur noch ca. 3800 cd/m², sodass der Rückgang innerhalb des durch die Polarwinkel von 0° und 3° gegebenen Bereichs mehr als 97% von L₃₅₅ beträgt. Demgegenüber beträgt der größte Rückgang innerhalb eines Polarwinkelbereichs von 1° in der C(355°)-Ebene des herkömmlichen Scheinwerfers nur ca. 80% des Wertes, den die Leuchtdichte des herkömmlichen Scheinwerfers bei einem Polarwinkel von 0° erreicht. Zwischen 2° und 5° nimmt die Leuchtdichte L der Beleuchtungseinrichtung 10 auf einen Wert von 1.500 cd/m² ab und steigt ab einem Polarwinkel von 7° wieder stark an, bildet dadurch eine weitere Hell-/Dunkelgrenze 15 und damit einen zusätzlich ausgeleuchteten Bereich 13 im Bereich der Leuchtdichtekurve A₃₅₅.

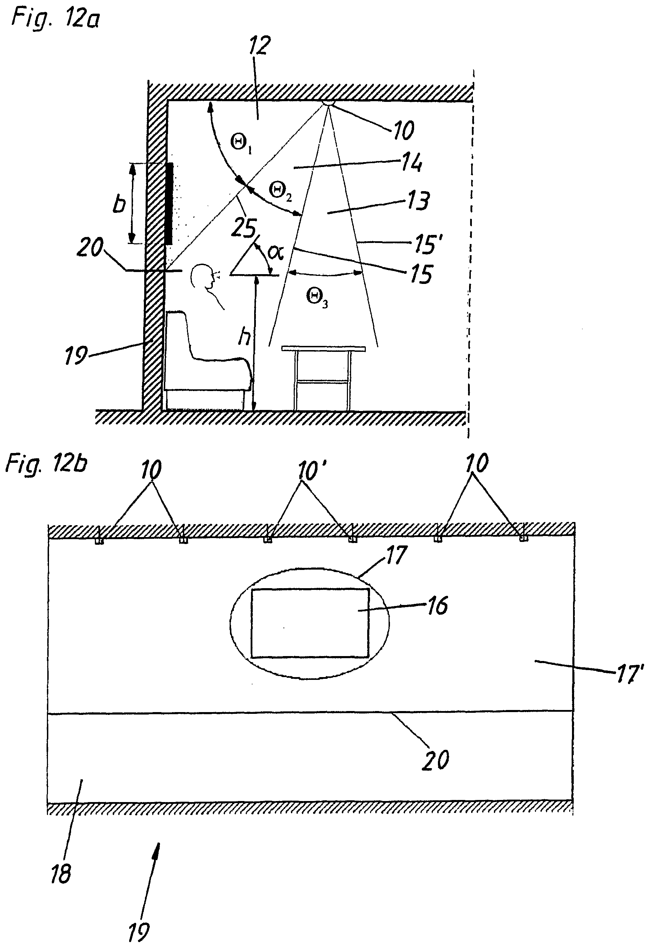

Fig. 12a zeigt in einer Querschnittsdarstellung eines Wohnraumes ein weiteres Anwendungsbeispiel einer erfindungsgemäßen Beleuchtungseinrichtung 10, welche an der Decke des Raumes in einem gewissen Abstand von einer Wand 19 angeordnet ist.

Ziel der erfindungsgemäßen Beleuchtungseinrichtung 10 ist es, ein Bild 16 mit einer Höhe b besonders effektiv auszuleuchten, ohne dabei einen Beobachter, dessen Augen auf einer Höhe h angeordnet sind und der über einen physiologischen Blick-Grenzwinkel α verfügt, zu blenden. Zu diesem Zweck ist vorgesehen, dass ein Bereich 12 besonders gut ausgeleuchtet wird, indem in dieser Bereich 12, der in diesem Ausführungsbeispiel in der Schnittebene einen Polarwinkel θ₁ von etwas mehr als 40° umschließt, mit hohen Leuchtdichtewerten beleuchtet wird und in diesem Bereich 12 und auch das Maximum 3 der Lichtstärkeverteilung angeordnet ist.

Eine erfindungsgemäße, ausgeprägte Hell-/Dunkelgrenze 25 der Leuchtdichte, die an der Wand 19 eine Grenzlinie 20 ausbildet, ist zwischen dem Bereich 12 und einem Bereich 14, der in diesem Ausführungsbeispiel in der Schnittebene einen Polarwinkel θ₂ von ca. 30° umschließt, und der sich durch eine sehr geringe Leuchtdichte L auszeichnet und daher effektiv ausgeblendet wird, angeordnet. Der Bereichs 14 ist derart im Raum angeordnet ist, dass sich das Blickfeld des Beobachters im Wesentlichen im ausgeblendeten Bereich 14 befindet.

Eine weitere Hell-/Dunkelgrenze 15 wiederum ist zwischen dem ausgeblendeten Bereich 14 und einem zusätzlich ausgeleuchteten Bereich 13, indem die Leuchtdichte L auf Werte zunimmt, die mindestens halb so groß wie die Leuchtdichte die in Richtung des Maximums 3 der Lichtstärke I auftritt, sind. In der Schnittebene in Fig. 12a liegt die Richtung des Maximums 3 der Lichtstärkeverteilung, wodurch diese Schnittebene die durch den Azimutwinkel von 0° gedachte Ebene 7 darstellt. Der Bereich 13 umschließt in diesem Ausführungsbeispiel in der Schnittebene einen Polarwinkel θ₃ von ca. 24°.

Eine Vorderansicht der Wand 19 ist in Fig. 12b zu sehen. Dabei werden insgesamt sechs erfindungsgemäße Beleuchtungseinrichtungen 10, 10' verwendet, wobei die mittleren zwei Beleuchtungseinrichtungen 10 eine etwas andere Leuchtdichteverteilung als die äußeren zwei Beleuchtungseinrichtungen 10 aufweisen, damit das Bild 16 nur im Bereich 17 besonders hell ausgeleuchtet wird. Die Projektion des Bereichs 12 auf die Wand 19 ergibt dadurch die Bereiche 17 und 17'. Die Beleuchtungseinrichtungen 10 dienen zur Erzeugung des Bereichs 17', während die Beleuchtungseinrichtungen 10' beispielsweise etwas größere maximale Leuchtdichten aufweisen und dadurch den Bereich 17 noch heller ausleuchten können. Die durch die Hell-/Dunkelgrenze 25 erzeugte Grenzlinie 20 trennt die Wand 19 in einen ausgeleuchteten Bereich 17, 17' und in einen ausgeblendeten Bereich 18.

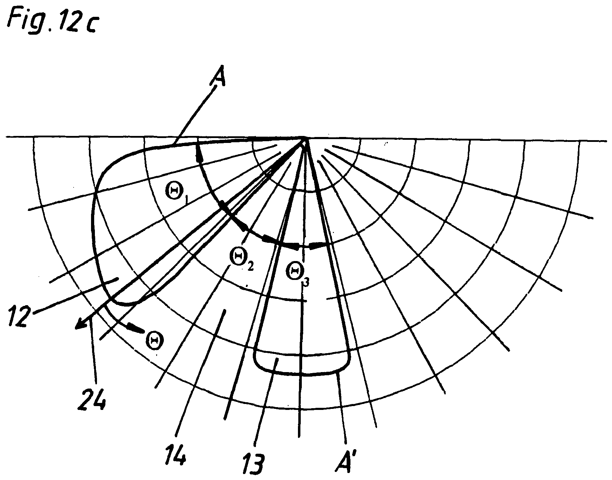

In Fig. 12c ist die Leuchtdichtekurve A, A' in der Schnittebene der Fig. 12a in einem Polardiagramm dargestellt. Diese Schnittebene entspricht, wie oben erwähnt, der durch den Azimutwinkel ϕ von 0° gedachten Ebene 7. Senkrecht auf diese Schnittebene ist die durch den Polarwinkel von 0° gedachte Hauptebene 4 angeordnet, wobei die Richtung des Lichtstärkemaximums 3 die Schnittgerade der Hauptebene 4 mit der durch den Azimutwinkel ϕ von 0° gedachten Ebene 7 darstellt und somit die Hauptgerade 24. Durch den Pfeil wird dabei die Abstrahlrichtung gekennzeichnet. In Richtung des Maximums 3 der Lichtstärkeverteilung erreicht die Leuchtdichte L einen Wert L₀, der in diesem Ausführungsbeispiel der Erfindung ein Maximum der Leuchtdichte L ist. Ausgehend von diesem Wert L₀ der Leuchtdichte L in Richtung des Maximums 3 der Lichtstärkeverteilung nimmt die Leuchtdichte bei einem Polarwinkel von etwa 7° rapide ab und bildet dadurch die erfindungsgemäße scharf ausgeprägte Hell-/Dunkelgrenze 25, welche die Grenzlinie 20 auf der Wand 19 ausbildet. Die Pfeilrichtung des dargestellten Kreisbogens weist dabei in Richtung zunehmender Polarwinkel. In Fig. 12c ist der hell ausgeleuchtete Bereich 12 von der Leuchtdichtekurve A umrandet. Dieser dient zur Beleuchtung des Bildes 16. Für weiter zunehmende Polarwinkel weist die Leuchtdichte sehr geringe Wert auf und bildet dadurch den ausgeblendeten Bereich 14. Ab einem Polarwinkel von in etwa 39° ist ein zusätzlich ausgeleuchteter Bereich 13, wie durch die Umrandung von der Leuchtdichtekurve A' dargestellt, angeordnet, in dem die Leuchtdichte L wieder beinahe auf den Wert ihres Maximus, das sie in Richtung des Maximus 3 der Lichtstärkeverteilung aufweist, ansteigt. Dabei wird eine weitere ausgeprägte Hell-/Dunkelgrenze 15 erreicht, genauso wie eine weitere Hell-/Dunkelgrenze 15' diesen zusätzlich ausgeleuchteten Bereich 13, bei einem Polarwinkel von etwa 63° abschließt.

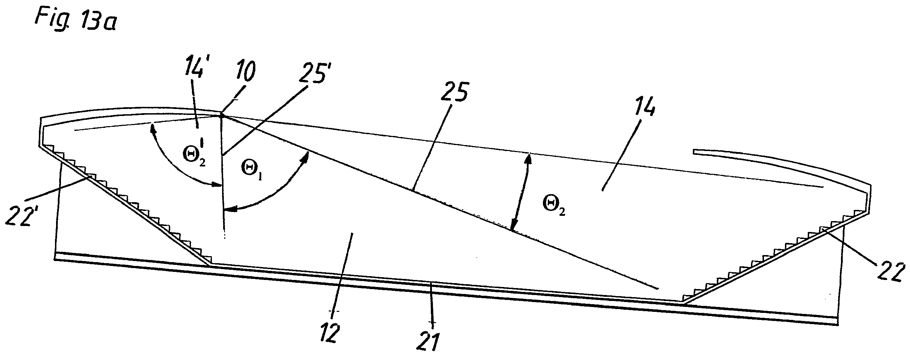

In Fig. 13a ist die Anwendung einer erfindungsgemäßen Beleuchtungseinrichtung zur Ausleuchtung eines Sportplatzes, umfassend ein Sportfeld 21 sowie Tribünen 22 und 22' in einer Schnittebene, die der durch den Azimutwinkel von 0° gedachten Ebene 7 entspricht, dargestellt. Die Ebene 7 ist in diesem Fall vertikal angeordnet. Obwohl die erfindungsgemäße Beleuchtungseinrichtung 10 nur auf einer Tribüne 22' angeordnet ist, kann es vorgesehen sein, dass eine analoge Beleuchtungseinrichtung auch an der Tribüne 22 angeordnet ist. Die Zuseher auf den Tribünen 22, 22' sollen dabei möglichst gut die Sportler auf dem Sportfeld 21 beobachten können, ohne selbst von der Beleuchtungseinrichtung 10 geblendet zu werden. Zu diesem Zweck ist es vorgesehen, dass das Sportfeld 21 innerhalb eines gut ausgeleuchteten Bereich 12, der in diesem Ausführungsbeispiel in der Schnittebene einen Polarwinkel θ₁ von ca. 65° umschließt, angeordnet ist, während die Tribünen in Winkelbereichen der ausgeblendeten Bereiche 14, 14' liegen. Dabei sind an den Grenzen zwischen den Bereichen 12 und 14 bzw. 12 und 14' erfindungsgemäße ausgeprägte Hell-/ Dunkelgrenzen 25 und 25' angeordnet. Diese Ausprägung dieser Hell-/Dunkelgrenzen 25, 25', indem in einem geringen Polarwinkelbereich die Leuchtdichte L rapide abnimmt hat den Vorteil, dass bereits die Besucher in den untersten Reihen nicht mehr geblendet werden, obwohl das unmittelbar daran anschließende Sportfeld 21 hell erleuchtet ist bzw. mit hoher Leuchtdichte und auch hoher Lichtstärke beleuchtet ist. Die Bereiche 14 bzw. 14' umschließen in diesem Ausführungsbeispiel in der Schnittebene Polarwinkel θ₂ von ca. 15° bzw. θ₂' von ca. 85°.

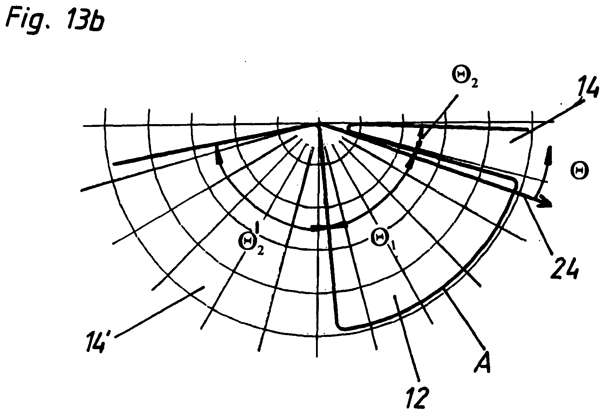

In Fig. 13b ist die Leuchtdichtekurve A für die in der Fig. 13a gezeigten Schnittebene, welche der durch den Azimutwinkel ϕ von 0° gedachten Ebene 7 entspricht, dargestellt. Senkrecht auf diese Ebene 7 steht die durch den Polarwinkel von 0° gedachte Hauptebene 4, welche durch die Richtung des Maximums 3 der Lichtstärkeverteilung, also die Hauptgerade 24, gekennzeichnet ist. Die Richtung des Maximums 3 der Lichtstärkeverteüung ergibt somit die Schnittgerade zwischen der Hauptebene 4 und der durch den Azimutwinkel von 0° gedachten Ebene 7. Die Pfeilrichtung der Hauptgeraden 24 zeigt dabei in Abstrahlrichtung, also vom Ursprung des Koordinatensystems weg. In etwa innerhalb des durch die Polarwinkel von 3° und 6° gegebenen Polarwinkelbereichs nimmt die Leuchtdichte L unter Ausbildung einer scharf ausgeprägten Hell-/Dunkelgrenze 25 auf einen Wert von weniger als 10% jenes Wertes L₀, den sie in Richtung des Maximums 3 der Lichtstärkeverteilung aufweist, ab. Dabei ist der Wert L₀ der Leuchtdichte L in Richtung des Maximums 3 der Lichtstärkeverteilung ein Maximalwert der Leuchtdichte L, der aber in einem ganzen Polarwinkelbereich von -65° bis in etwa 2° im Wesentlichen konstant bleibt. Dadurch wird erreicht, dass das gesamte Sportfeld 21 im Wesentlichen mit der gleichen Leuchtdichte L unter Ausbildung eines gut ausgeleuchteten Bereiches 12, wie durch die Umrandung des Teils der Leuchtdichtekurve A mit hohen Leuchtdichtewerten dargestellt, hell ausgeleuchtet ist. Für weiter zunehmende Polarwinkel, wie durch die Pfeilrichtung des Kreisbogens dargestellt, weist die Leuchtdichte L nur sehr geringe Wert auf, und bildet dadurch den wenig ausgeleuchteten und ausgeblendeten Bereich 14, in dem die Tribüne 22 angeordnet ist. Bei einem Polarwinkel von in etwa - 65° ist eine weitere erfindungsgemäße Hell-/Dunkelgrenze 25' zur Abgrenzung von einem weiteren, wenig ausgeleuchteten und ausgeblendeten Bereich 14', in dem die Tribüne 22' angeordnet ist.

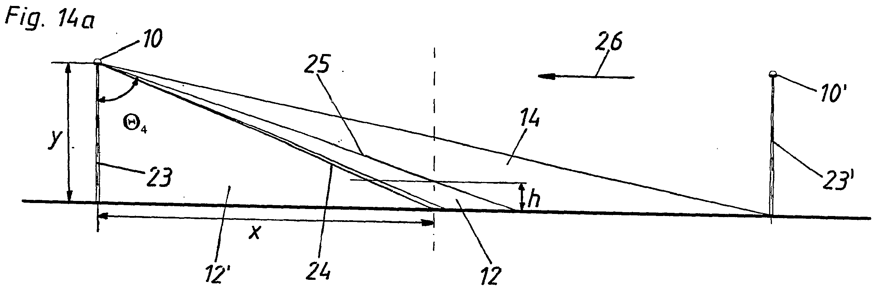

In Fig. 14a ist die Anwendung einer erfindungsgemäßen Beleuchtungseinrichtung 10 zur Beleuchtung einer Straße in einer Schnittebene, die der durch den Azimutwinkel von 0° gedachten Ebene 7 entspricht und wiederum vertikal ist, dargestellt. Dabei ist für in Richtung des dargestellten Pfeils 26 fahrende Verkehrsteilnehmer besonders der Bereich 14 bezüglich einer möglichen Blendung kritisch, da dieser Bereich genau im Gesichtsfeld der Verkehrsteilnehmer, das zumindest für die meisten Verkehrsteilnehmer in etwa einer Höhe h von ca. 1 m angeordnet ist, liegt. Demgegenüber sollen Bereiche 12 und 12', die in diesem Ausführungsbeispiel in der Schnittebene einen Polarwinkel θ₄ von ca. 72° umschließen, naturgemäß besonders gut ausgeleuchtet sein, um sämtliche Verkehrshindernisse, die in Fahrtrichtung auftreten, rechtzeitig erkennbar sind. Die erfindungsgemäße Beleuchtungseinrichtung 10, die in diesem Ausführungsbeispiel auf einer Straßenlaterne 23 in einer Höhe y von in etwa 5 m angebracht ist, verbessert den Stand der Technik, wo Verkehrsteilnehmer im Bereich 14 von herkömmlichen Straßenbeleuchtungen geblendet werden, indem dieser Bereich 14 ausgeblendet wird. Zu diesem Zweck wird ausgehend vom Maximum 3 der Lichtstärkeverteilung, welches zwischen den Bereichen 12 und 12' angeordnet ist und in einer horizontalen Entfernung x, die in diesem Ausführungsbeispiel etwa 12,5 m beträgt, auf die Straße trifft, bei einem Polarwinkel von in etwa 4° eine scharf ausgeprägte Hell-/Dunkelgrenze 25 angeordnet. Dazu wird innerhalb eines Polarwinkelbereiches von 1° der Wert L₀ der Leuchtdichte bezüglich der Leuchtdichte, die in Richtung des Maximums der Lichtstärkeverteilung auftritt, um mehr als 70% reduziert. Mit anderen Worten: Ist die Leuchtdichte L₀ in Richtung des Maximums 3 der Lichtstärkeverteilung beispielsweise L₀ = 1 Mio. cd/m², so nimmt diese innerhalb des durch die Polarwinkel von 4° und 5° gegebenen Bereiches auf einen Wert von weniger als 300.000 cd/m² ab. Es kann vorgesehen sein, insbesondere bei in beiden Fahrtrichtungen befahrenen Straßen, dass die Leuchtdichte symmetrisch bzgl. der Laterne 23 ist und daher gleichartig auch in Richtung des Pfeils 26 ausgebildet ist. Dies gilt natürlich auch für weitere Straßenlaternen 23' mit erfindungsgemäßen Beleuchtungseinrichtungen 10'.

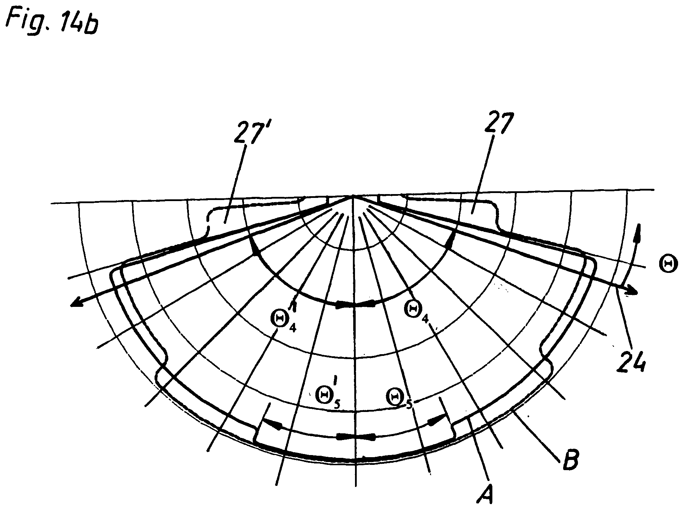

Wie aus Fig. 14b, welche die Leuchtdichtekurve A in der in Fig. 14a dargestellten Schnittebene zeigt, ersichtlich ist, ist Wert L₀ der Leuchtdichte L, der in Richtung des Maximums 3 der Lichtstärkeverteilung auftritt, kein Maximalwert. Der Maximalwert der Leuchtdichte wird nämlich genau unterhalb der Straßenlaterne 23, in einem Bereich der die Polarwinkel θ₅ und θ₅', die in diesem Ausführungsbeispiel jeweils ca. 22° betragen, erreicht. Allerdings beträgt der Wert L₀ der Leuchtdichte L, der in Richtung des Maximums 3 der Lichtstärkeverteilung erreicht wird, in etwa 90% der maximalen Leuchtdichte L. Die in Fig. 14a und 14b dargestellte Ebene ist wiederum die durch den Azimutwinkel ϕ von 0° gedachte Ebene 7, auf welche die durch den Polarwinkel von 0° gedachte Hauptebene 4 orthogonal angeordnet ist. Dabei zeigt die Richtung des Maximums 3 der Lichtstärkeverteilung die Schnittgerade zwischen der Ebene 7 und der Hauptebene 4, also die Hauptgerade 24, und definiert dadurch eben diese Hauptebene 4. Wie oben erwähnt, wird die erfindungsgemäße, scharf ausgeprägte Hell-/Dunkelgrenze bei einem Polarwinkel von in etwa 4° angeordnet, wobei die Polarwinkel ausgehend von der Hauptgerade 24 in Richtung des Pfeils des Kreisbogens ansteigen. Bei in beiden Richtungen befahrenen Straßen ist es sinnvoll, die Leuchtdichtekurve A für beide mögliche Fahrtrichtungen symmetrisch auszubilden. Demnach gibt es entsprechend des Bereichs 12 einen den Polarwinkel θ₄' umschließenden hell ausgeleuchteten Bereich, wobei θ₄' und θ₄ übereinstimmen könne. Eine erfindungsgemäße Hell-/Dunkelgrenze 24' in etwa bei einem Polarwinkel von -140° auf. Ebenso ist bei etwa -136° ein weiteres Maximum 3' der Lichtstärkeverteilung gegeben. Neben der erfindungsgemäßen Leuchtdichtekurve A, die als durchgezogene Kurve A dargestellt ist, ist auch ein Vergleich mit der Leuchtdichtekurve B einer Straßenbeleuchtung nach dem Stand der Technik in Form einer strichlierten Kurve dargestellt. Dabei ist deutlich erkennbar, dass herkömmliche Straßenbeleuchtungen keine derart ausgeprägten Hell-/Dunkelgrenzen aufweisen, da in den Bereichen 27 und 27', welche genau den Bereich 14 aus Fig. 14a betreffen, der Wert der Leuchtdichte L noch groß genug ist, um die Verkehrsteilnehmer entsprechend zu blenden.

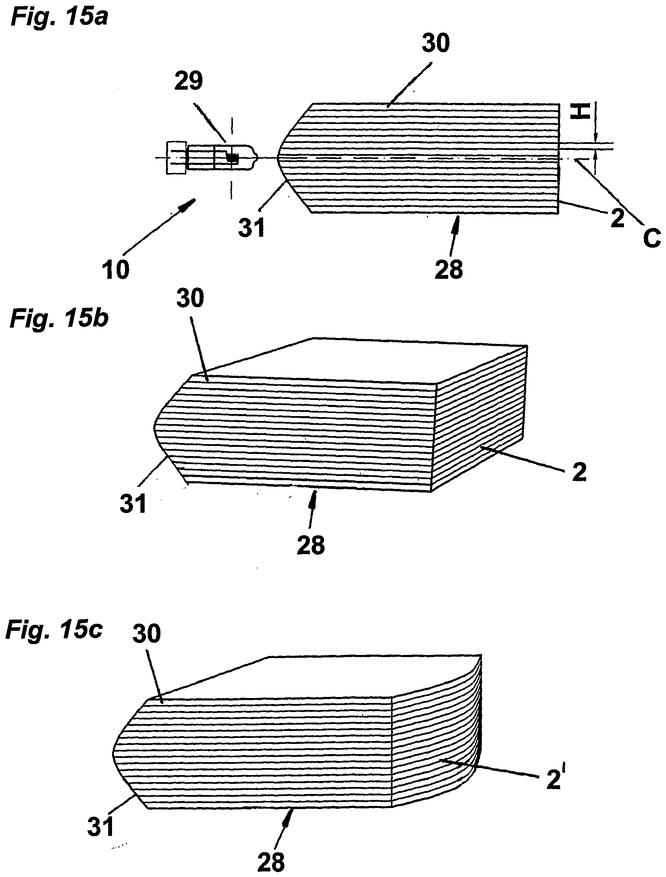

Fig. 15a zeigt einen Querschnitt durch eine erfindungsgemäße Beleuchtungseinrichtung 10 mit einem Lichtleitelement 28 und einer zugeordneten Lichtquelle 29, wobei die Schnittebene senkrecht auf Oberfläche des Lichtleitelements 28 durch die übereinander angeordneten Lichtleiter 30, aus denen das Lichtleitelement 28 besteht, gelegt wurde. Das Lichtleitelement 28 ist aus den Lichtleitern 30 in Form einer Lamelle zusammengefügt. Die einzelnen Lichtleiter 30 weisen dabei eine, im Wesentlichen jeweils gleiche, Höhe H auf. Das Lichtleitelement 28 ist in Richtung der Hauptachse C, welche im geometrischen Zentrum, in diesem Fall dem Flächenschwerpunkt, der plan polierten Lichtaustrittsfläche 2 angeordnet ist und parallel zu den Längskanten der Lichtleiter 30 verläuft. Bis auf den Ort der asphärisch geschliffenen Lichteintrittsfläche 31 weisen die Lichtleiter 30 rechteckigen Querschnitt auf. Die Eintrittsfläche 31 weist einen asphärischen Schliff auf, damit durch diesen eine Linsenfunktion erfüllt werden kann, indem eintretende Lichtstrahlen gebündelt werden. In Fig. 15b ist eine perspektivische Darstellung des Lichtleitelements 28 mit den einzelnen übereinander angeordneten Lichtleitern 30 dargestellt. Fig. 15c zeigt eine andere Ausführungsform des Lichtleitelements 28 in perspektivischer Darstellung. In dieser ist auch die Lichtaustrittsfläche 2' asphärisch geschliffen.

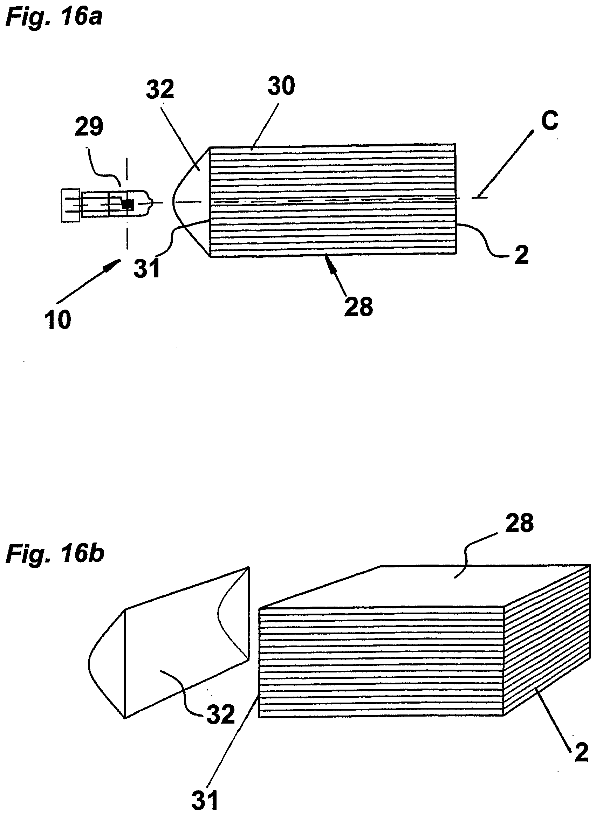

Eine weitere Ausführungsform des erfindungsgemäßen Lichtleitelementes 28 in einer Beleuchtungseinrichtung 10 mit einer Lichtquelle 29 ist in einer Querschnittsdarstellung in Fig. 16a gezeigt, wobei die Schnittebene wie in Fig. 15a gewählt wurde. Das Lichtleitelement 28 ist quaderförmig und besteht aus jeweils gleich großen Lichtleitern 30, die übereinander angeordnet sind. Im geometrischen Zentrum der plan polierten Lichtaustrittsfläche 2 befindet sich die in Längsrichtung des Lichtleitelements 28 orientierte, also parallel zu den Längskanten der Lichtleiter 30 verlaufende, Hauptachse C. In diesem Ausführungsbeispiel ist auch die Lichteintrittsfläche 31 plan poliert, sodass auch die Lichtleiter 30 selbst quaderförmig sind. Statt die Lichteintrittsfläche 31 asphärisch zu schleifen, ist unmittelbar an die Lichteintrittsfläche 31 ein Linsensystem 32, in diesem Fall bestehend aus einer Linse, angeordnet. Dieses Linsensystem 32 hat die Aufgabe, von der Lichtquelle 29 ausgehende Strahlen möglichst parallel zur Hauptachse C in das Lichtleitelement 28 einzuführen. In Fig. 16b ist eine perspektivische Ansicht des Lichtleitelementes 28 aus Fig. 16a und des Linsensystems 32 zu sehen.

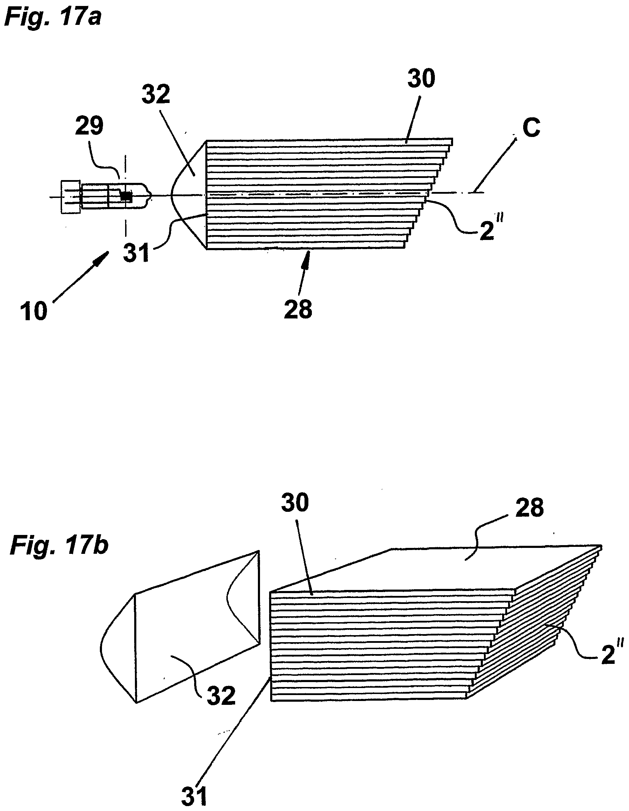

Eine wiederum andere Ausführungsform der Erfindung ist in Fig. 17a gezeigt. Zur Parallelisierung bzw. Bündelung des einzukoppelnden Lichtes von der Lichtquelle 29 ist wiederum vor der plan polierten Lichteintrittsfläche 31 des Lichtleitelementes 28 ein Linsensystem 32 angeordnet. In diesem Ausführungsbeispiel ist allerdings die in Richtung der Hauptachse C gemessene Länge der einzelnen Lichtleiter 30 verschieden, sodass die Lichtleiter 30 an der Lichtaustrittfläche 2" stufenförmig angeordnet sind, wobei die Länge der Lichtleiter 30 von unten nach oben zunehmend ist. Die Hauptachse C ist im Schnittpunkt der zwei Symmetrieachsen der Lichtaustrittsfläche 2" angeordnet, und kann mit der Hauptgeraden 24 übereinstimmen. Dies sorgt dafür, dass schräg nach oben aus der Lichtaustrittsfläche 2" austretende Strahlen zumindest teilweise von längeren, darüber angeordneten Lichtleitern 30 geblockt und aus dem Strahlenbündel ausgeblendet werden können. Wiederum zeigt Fig. 17b dieses Ausführungsbeispiel des erfindungsgemäßen Lichtleitelementes 28 sowie des Linsensystems 32 in perspektivischer Darstellung. Die einzelnen Lichtleiter 30 sind wiederum quaderförmig ausgebildet.

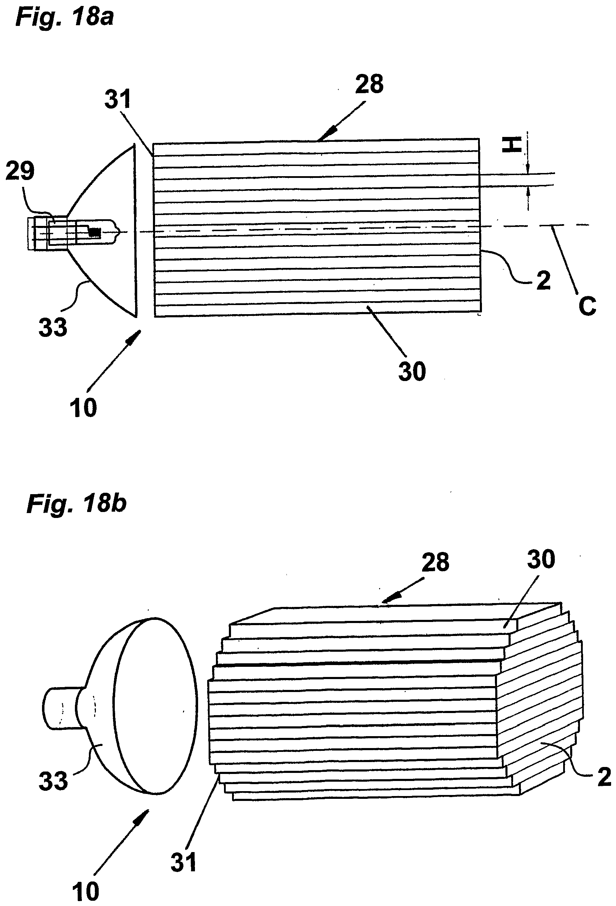

Ein weiteres Ausführungsbeispiel einer erfindungsgemäßen Beleuchtungseinrichtung 10 ist in Fig. 18a dargestellt. Das Lichtleitelement 28 besteht aus übereinander angeordneten quaderförmigen Lichtleitern 30 und einer plan polierten Lichteintrittsfläche 31 sowie einer plan polierten Lichtaustrittsfläche 2. Die Höhe H der einzelnen Lichtleiter 30 ist im Wesentlichen für alle Lichtleiter 30 gleich groß. Der Lichtquelle 29 ist ein Reflektor 33 zugeordnet, der über eine reflektive beschichtete Innenseite verfügen kann. Diese erfüllt eine ähnliche Aufgabe wie das in den obigen Figuren erwähnte Linsensystem 32. Von der Lichtquelle 29 ausgehende und stark von der Richtung der Hauptachse C abweichende Lichtstrahlen werden durch den Reflektor zumindest teilweise parallelisiert. In Fig. 18b ist eine perspektivische Ansicht des Reflektors 33 und des Lichtleitelementes 28 zu sehen. Dabei ist zu erkennen, dass die Breite der einzelnen Lichtleiter 30 nicht für alle Lichtleiter 30 gleich groß ist, sondern von einem kleinsten Wert oben und unten zu einem größten Wert im Bereich der Mittellage des Lichtleitelementes 28 zunimmt.

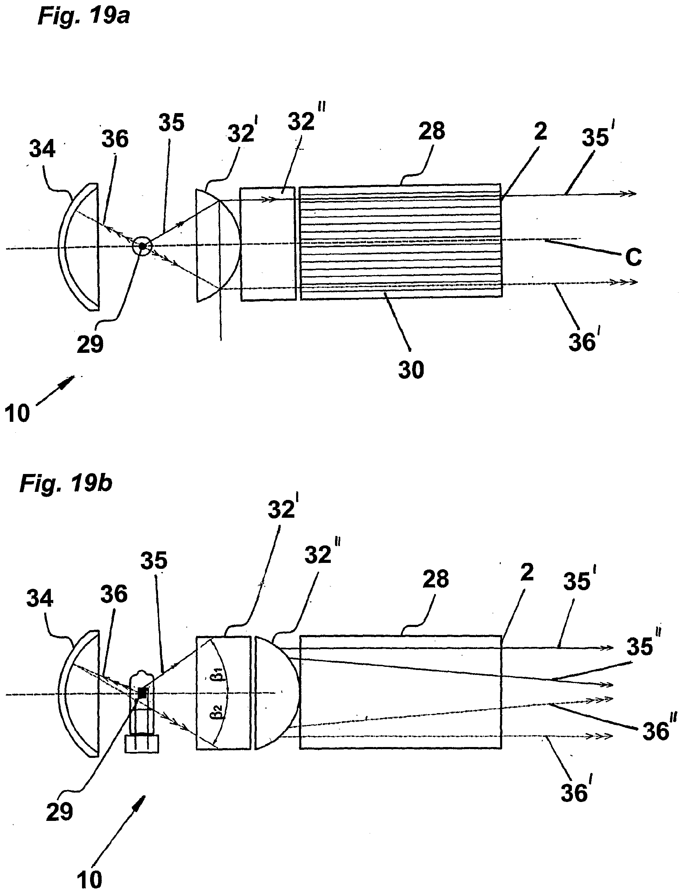

Figur 19a zeigt einen Querschnitt durch eine Ausführungsform der Beleuchtungseinrichtung 10, wobei die Schnittebene wie in den vorangehenden Figuren senkrecht auf die Lichtleiter 30 und durch die Hauptachse C gelegt ist. Das Linsensystem 32 besteht aus zwei Linsen 32' und 32". Der Reflektor 33 umfasst einen Kalottenspiegel 34 in Form einer Kugelkalotte, dessen Größe, innerer Kugelradius und Position im Verhältnis zum Leuchtmittel so bemessen ist, dass ein maximaler Lichtstrom wiederum auf das Linsensystem 32 reflektiert wird, wobei hier nur der Kalottenspiegel 34 selbst dargestellt ist. Das quaderförmige Lichtleitelement 28 besteht aus übereinander angeordneten, im Wesentlichen gleich großen Lichtleitern 30 und bildet dadurch eine Art Lamellenpaket. Wie aus der Figur 18a ersichtlich ist, dient sowohl der Kalottenspiegel 34 als auch das Linsensystem 32 zur Parallelisierung bzw. Bündelung in Richtung der Hauptachse C der austretenden Lichtstrahlen. Von der Lichtquelle 29 in Richtung der Lichteintrittsfläche 31, aber schräg zur Hauptachse C orientierte, emittierte Lichtstrahlen 16 werden vom Linsensystem 32 in Richtung der Hauptachse C umgelenkt. Die Projektion des austretenden Lichtstrahl 35' in die Schnittebene steht daher zumindest im Wesentlichen senkrecht auf die Lichtaustrittsfläche 2. Lichtstrahlen, die von der Lichtquelle 29 in von der Lichteintrittsfläche 31 abgewandte Richtungen emittiert werden, werden vom Kalottenspiegel 34 reflektiert und dann ebenso in das Lichtleitelement 28 eingekoppelt, und treten nach Durchgang desselben in Richtung der Hauptachse C ebenfalls derart aus, dass die Projektion des austretenden Lichtstrahls 36' in die Schnittebene zumindest im Wesentlichen senkrecht auf die Lichtaustrittsfläche 2 steht. Je nach Dimensionierung des Lichtleitelements 28 können beispielsweise die austretenden Lichtstrahlen 35' und 36' nur in einem Winkel von beispielsweise -2° bis 2°, vorzugsweise -2° bis 0° bezüglich der Senkrechten auf die Lichtaustrittsfläche 2 aus dieser austreten. Es kann aber auch vorgesehen sein, dass durch das Lichtleitelement 28 nur ein Teil des austretenden Strahlenbündels ausgeblendet wird, und im Wesentlichen nur Strahlen deren Projektion in die Schnittebene annähernd senkrecht auf die Lichtaustrittfläche 2 oder nach unten gerichtet ist aus dem Lichtleitelement 28 austreten. Die Schnittebene der Fig. 19a kann beispielsweise die durch den Azimutwinkel von 0° gedachte Ebene 7 darstellen. Aus diesem Grund werden in dieser Zeichnung nach oben geneigte aus der Lichtaustrittsfläche 2 austretende Lichtstrahlen reduziert, sodass in diesem Ausführungsbeispiel die Horizontalebene eine ausgeprägte Hell-/Dunkelgrenze darstellt.

Dieses Ausführungsbeispiel der Beleuchtungseinrichtung 10 ist in einer weiteren Schnittdarstellung in Fig. 19b gezeigt, wobei die Schnittebene in dieser Figur senkrecht auf die Schnittebene der Fig. 19a gelegt ist, also beispielsweise der durch den Polarwinkel von 0° gedachten Hauptebene 7 entsprechen. Wie ersichtlich ist, ist der maximale Einkoppelungswinkel durch β₁ + β₂ gegeben. Wiederum werden von der Lichtquelle 29 in Richtung der Lichteintrittsfläche 2 emittierte Strahlen 35 vom Linsensystem 32, bestehend aus zwei Linsen 32' und 32" parallelisiert. In andere Richtungen emittierte Strahlen 36 werden nach Reflexion am Kalottenspiegel 34 ebenfalls parallelisiert. Wie anhand der austretenden Lichtstrahlen 35', 35" sowie 36', 36" ersichtlich ist, ist die Bündelung der austretenden Lichtstrahlen in dieser Schnittebene nicht so ausgeprägt wie in der Schnittebene der Fig. 19a. So können die Projektionen der austretenden Lichtstrahlen 35', 35" sowie 36', 36" in die Schnittebene der Fig. 19b beispielsweise um bis zu 5° von der Senkrechten auf die Lichtaustrittsfläche 2 abweichen. Aufgrund der geringeren Abweichung in der Richtung, wie sie in Fig. 19a gezeigt ist, ergibt sich, dass für dieses Ausführungsbeispiel eine ausgeprägte Hell/Dunkelgrenze durch eine Ebene senkrecht zur Schnittebene von Fig. 19a und parallel zur Schnittebene von Fig. 19b gebildet wird.

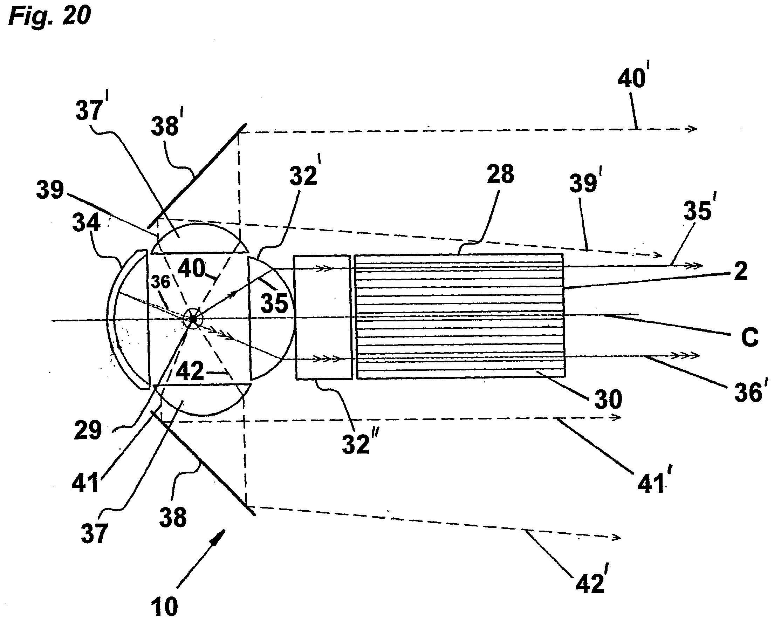

Eine Querschnittsdarstellung durch eine weitere Ausführungsform der erfindungsgemäßen Beleuchtungseinrichtung 10 ist in Fig. 20 gezeigt, wobei die Schnittebene senkrecht auf das quaderförmige Lichtleitelement 28, wie in Fig. 19a gelegt wurde und die Hauptachse C wiederum in dieser Schnittebene angeordnet ist. Die Hauptachse C ist dabei ebenfalls wieder im geometrischen Zentrum der Lichtaustrittsfläche 2 angeordnet und kann der Hauptgeraden 24 entsprechen. Die Schnittebene kann beispielsweise der Ebene 7 entsprechen. Das Linsensystem 32 besteht aus zwei Linsen 32' und 32", wodurch Lichtstrahlen 35, die von der Lichtquelle 29 in Richtung der Lichteintrittsfläche 31 emittiert werden, schon vor dem Eintritt in das Lichtleitelement 28 in Richtung der Hauptachse C abgelenkt und damit gebündelt werden. Das gleiche gilt für in andere Richtungen emittierte Strahlen 36, nachdem sie vom Kalottenspiegel 34 reflektiert wurden. Das Lichtleitelement 28 parallelisiert bzw. bündelt dann die hindurchgehenden Strahlen erfindungsgemäß weiter, sodass die austretenden Strahlen 35' bzw. 36' oder zumindest deren Projektionen in die Schnittebene eine geringe Abweichung von beispielsweise 0 bis -2° bezüglich der Senkrechten auf die Lichtaustrittsfläche 2, also auf eine Parallele der Hauptachse C aufweisen. Zusätzlich verfügt die Beleuchtungseinrichtung 10 über weitere Linsen 37 und 37' und zugehörige untere bzw. obere Umlenkspiegel 38 bzw. 38', wodurch von der Lichtquelle 29 austretende Strahlen, welche nicht vom Kalottenspiegel 34 bzw. der Linse 32' erfasst werden, ebenfalls in Richtung der Hauptachse C zur Erzielung einer im jeweiligen Anwendungsfall gewünschten Gesamtlichtverteilung, dh Leuchtdichteverteilung, abgelenkt werden, wobei diese Strahlen 39', 40', 41' und 42' oder zumindest deren Projektionen in die Schnittebene beispielsweise eine Abweichung im Ausmaß von 0 bis -5° bezüglich einer Parallelen der Hauptachse C aufweisen können. Dadurch kann eine ausgeprägte Hell/Dunkelgrenze durch eine parallel zu dieser Ebene liegende Ebene mit einem höheren Leuchtengesamtwirkungsgrad realisiert werden.

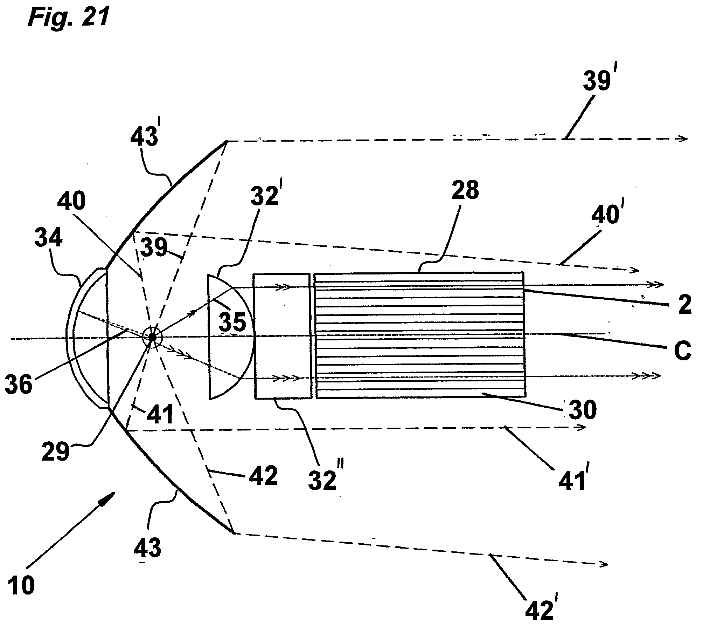

Eine weitere Ausführungsform einer erfindungsgemäßen Beleuchtungseinrichtung 10 ist wiederum in einer Schnittdarstellung mit einer wie oben gewählten Schnittebene in Fig. 21 dargestellt. Hierbei umfasst der der Lichtquelle 29 zugeordnete Reflektor 33 neben dem Kalottenspiegel 34 weiters einen unteren sowie oberen Reflektor 43 bzw. 43'. Durch diese Anordnung kann auch ohne die Linsen 37 bzw. 37' ein ähnlicher Strahlengang und damit eine ähnliche Hell/Dunkelgrenze wie in Fig. 20 realisiert werden.

Wie weiter oben erwähnt, wird durch das Linsensystem 32 bereits ein Strahlenbündel, welches durch die Lichteintrittsfläche 31 in das Lichtleitelement 28 eintritt, erzeugt. Eine Aufgabe des Lichtleitelementes 28 ist es nun, dieses enge Strahlenbündel weiter zu beschneiden, also weiter zu bündeln, indem ein der Hauptteil des Strahlenbündels geradlinig und ungehindert durch das Lichtleitelement 28 verlaufen kann und ein Teil der Strahlen über Reflexion, beispielsweise durch Totalreflexion, zur Lichtaustrittsfläche 2 geleitet wird, während ein Teil der Strahlen absorbiert oder diffus reflektiert und aus dem Strahlenbündel ausgeblendet wird.

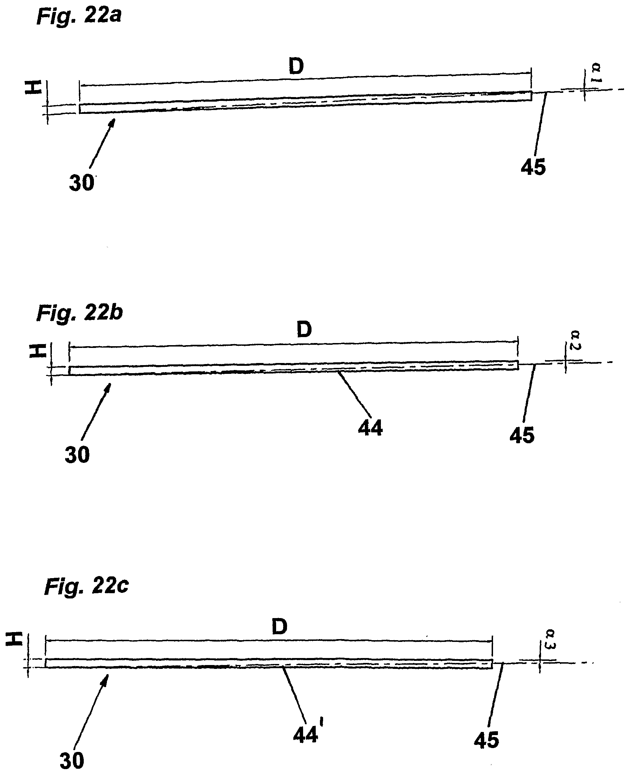

In Fig. 22a bis c ist in einem Querschnitt ein einzelner Lichtleiter 30 des Lichtleitelements 28 dargestellt. Der wirksame Strahlungswinkel α₁, also jener Winkel bezüglich der Längsrichtung des Lichtleiters 30, ist gegeben durch jenen Strahl 45, der schräg, aber geradlinig und ohne Kontakt zur Wandung, mit Ausnahme der Lichteinkoppel- und Lichtaustrittsfläche des Lichtleiters 30, verläuft. Somit ist der wirksame Strahlungswinkel durch das Verhältnis von Länge D zu Höhe H des Lichtleiters gegeben. In diesem Ausführungsbeispiel beträgt dieses Verhältnis D zu H 80 : 1, wodurch α₁ ungefähr 0,7° beträgt. In den in Fig. 22a bis c dargestellten Lichtleitern ist die Wandung im Bereich der Unterseite der Längsrichtung des Lichtleiters mit einer Struktur versehen bzw. geschwärzt, sodass α₁ der maximale Winkel ist, den ein Strahl bezüglich der Längsrichtung des Lichtleiters 30 nach oben aufweisen kann. Eine Ebene, parallel zur Längsrichtung und senkrecht zur dargestellten Schnittebene, stellt daher eine Hell/Dunkelgrenze einer erfindungsgemäßen Beleuchtungseinrichtung 10 dar. Während in Fig. 22a die Unterseite der Wandung noch keinen Unterschied zur Oberseite der Wandung des Lichtleiters 30 aufweist, ist in Fig. 22b die Unterseite der Wandung des Lichtleiters 30 mit einer Struktur 44 versehen, wobei der Querschnitt dieser Struktur ein Sägezahnprofil mit einer Zahnneigung von 3° aufweist. Dadurch wird der ansonsten gleich wie in Fig. 22a eintretende Strahl 45 in Richtung der Unterseite der Wandung des Lichtleiters 12 abgelenkt, sodass der Winkel α₂ der Neigung des Strahls 45 nach oben kleiner als der Winkel α₁ ist. Durch eine Veränderung der Struktur wie in Fig. 22c, wo die Struktur 44' zusätzlich diffus mattiert ist, also mit einer Mikrostruktur versehen ist, wird der Neigungswinkel nach oben α₃ des austretenden Strahls 45 weiter verringert, wodurch die Hell/Dunkelgrenze weiter verschärft und präziser definiert wird.

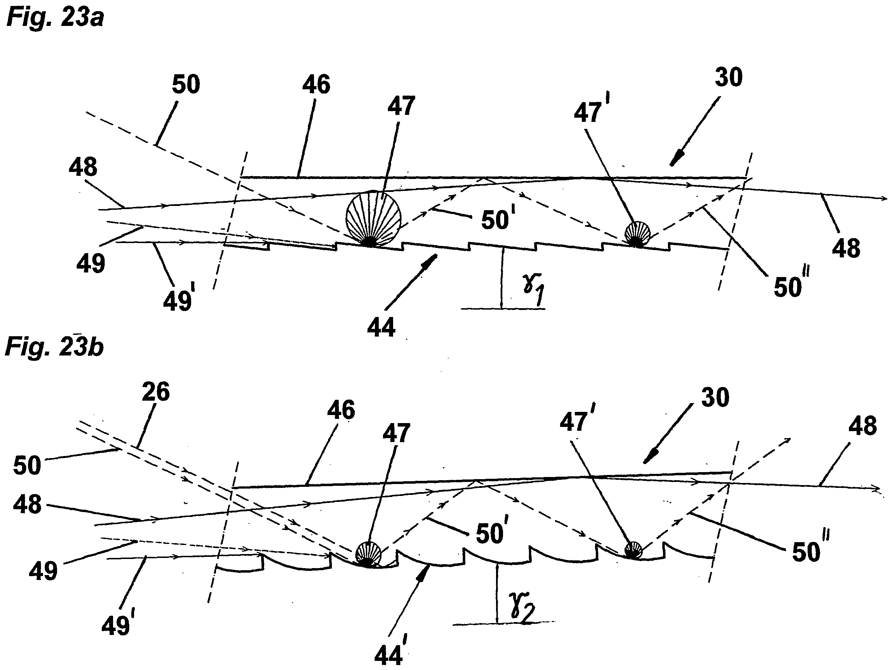

Die Funktionsweise des Lichtleitelementes 28 ist in den Detailansichten einer Querschnittdarstellung von Lichtleitern 30 in Fig. 23a und 23b gezeigt. In Fig. 23a ist der Lichtleiter 30 an seiner Unterseite der Wandung mit einer Struktur 44 versehen, die in diesem Fall im Querschnitt ein Sägezahnprofil mit einer Zahnneigung y₁ aufweist. An der Oberseite 46 der Wandung gibt es keine derartige Struktur, sodass ein dort auftreffender Strahl 48 über Totalreflexion weitergeleitet werden kann. Es kann auch vorgesehen sein diesen Bereich der Wandung verspiegelt auszuführen. Andere eintretende Strahlen 49 und 49', welche an und für sich die geometrische Bedingungen für Totalreflexion bei einer plan verlaufenden Wandung erfüllen würden, werden durch die senkrechten Kanten des Sägezahnprofils der Struktur 44 geblockt. Der Strahl 50 trifft auf der geneigten Seite des Sägezahnprofils der Struktur 44 auf. In diesem Ausführungsbeispiel ist die Struktur 44 diffus mattiert, wodurch nur ein gewisser Teil 50' des Strahls 50 totalreflektiert wird, während ein großer Teil 47 des Strahls 50 diffus reflektiert wird und damit nicht mehr an der Lichtaustrittsfläche 2 aus dem Lichtleitelement 28 austreten kann. An der Oberseite 46 der Wandung wird der Strahl 50' totalreflektiert, während beim nächsten Auftreffen auf die Struktur 44 wieder nur ein geringer Teil 50" totalreflektiert wird, während ein Großteil 47' des Strahls 50' wiederum diffus reflektiert wird. Dadurch wird es ermöglicht, dass Strahlen, welche bezüglich der Oberseite 46 der Wandung, also bezüglich der Längrichtung des Lichtleiters 30 nach oben geneigt sind, effektiv aus dem Strahlenbündel absorbiert werden. In Fig. 23b ist ein Ausführungsbeispiel eines Lichtleiters 30 mit einer anders ausgebildeten Struktur 44' gezeigt, wobei in diesem Fall die Zahnflanken nicht plan sondern gekrümmt sind. Dadurch ist für auf diese Zahnflanken auftreffende Strahlen 50 die geometrische Bedingung für Totalreflexion nicht überall erfüllt, sodass ein Teil des Strahls gebrochen und senkrecht zur Wandung abgelenkt wird, während ein geringer Teil 50' reflektiert wird. Wiederum ist die Struktur 44' diffus mattiert, sodass ein Großteil 47 des Strahls 50 durch diffuse Reflexion abgelenkt wird. Nach einer Totalreflexion des Strahls 50' an der Oberseite 46 der Wandung, wobei die Oberseite 46 der Wandung auch verspiegelt ausgeführt sein kann, wird beim nächsten Auftreffen auf die Struktur 44' wiederum nur ein Teil 50" reflektiert und ein Großteil 47' diffus reflektiert. Weitere Strahlen 51 werden nach einer Reflexion an den Zahnflanken durch die senkrechten Flanken geblockt.

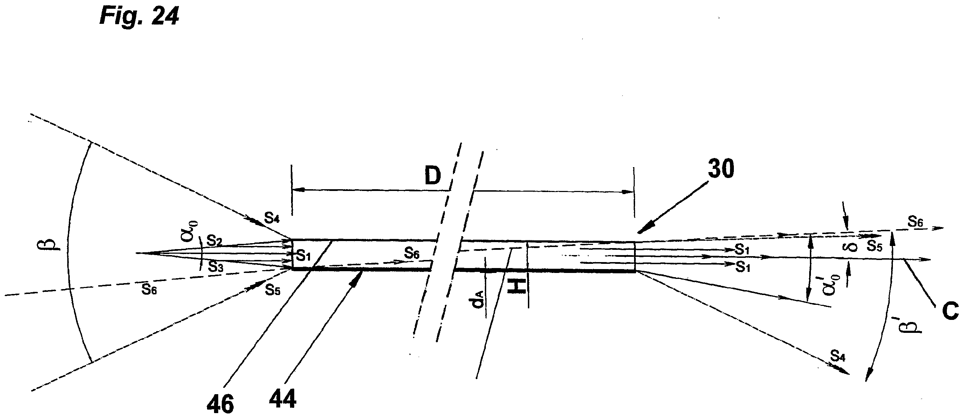

Zur weiteren Verdeutlichung der Wirkungsweise eines erfindungsgemäßen Lichtleitelementes 28 anhand eines der übereinander angeordneten Lichtleiter 30 sind in Fig. 24 weitere Strahlengänge wichtiger Strahlen dargestellt. Dabei ist der Lichtleiter 40 nicht in seiner ganzen Länge D sondern unterbrochen dargestellt. Die Unterseite der Wandung ist im Gegensatz zur Oberseite 46 der Wandung mit einer Struktur 44 und einer Beschichtung versehen, wobei die Tiefe d_{A} der Struktur, also das Ausmaß der Struktur senkrecht zur Längsrichtung, dabei viel kleiner als die Höhe H ist. Beispielsweise ist das Verhältnis d_{A} zu H kleiner als 1 : 20 und das der Dicke der Beschichtung zu H kleiner als 1:500. Ziel des lamellenförmigen Lichtleitelementes 28 ist es, Strahlen die bezüglich der Richtung der Strahlen S1, also bezüglich der Hauptachse C, nach oben geneigt sind effektiv aus dem austretenden Strahlenbündel auszublenden und dadurch zu einer Parallelisierung und Bündelung des austretenden Strahlenbündels und damit zu einer ausgeprägten Hell-/Dunkelgrenze 25 zu führen. Der energetische Hauptteil des eintretenden Strahlenbündels liegt in einem Winkelbereich α₀, welcher von den Strahlen S2 und S3 gegeben wird. Alle weiteren noch erfassten Strahlen liegen in einem Winkelbereich β, welcher von den Strahlen S4 und S5 gegeben ist und bilden zwar einen geringeren energetischen Anteil, sind aber hinsichtlich Ihres Austrittswinkels störend und werden durch die Struktur 44 an der Unterseite der Wandung des Lichtleiters 30 effektiv absorbiert oder zumindest parallelisiert. Der Strahl S6 definiert den Grenzstrahl, welcher gerade noch durch den Lichtleiter 30 ohne Kontakt mit der Oberseite 46 bzw. Unterseite der Wandung verläuft. Durch diesen Grenzstrahl S6 wird der Winkel δ definiert, welcher den maximalen Neigungswinkel nach oben, welches das austretende Strahlenbündel einnehmen kann, ergibt. Der energetische Hauptteil des austretenden Strahlenbündels liegt dabei in einem Winkel α₀', während das gesamte austretende Strahlenbündel in einem Winkelbereich β' liegt.

Es versteht sich von selbst, dass die erfindungsgemäße Beleuchtungseinrichtung nicht auf die in den Figuren dargestellten Ausführungsbeispiele beschränkt ist noch durch diese eingeschränkt werden soll. Insbesondere beschränkt sich der Anwendungsbereich der erfindungsgemäßen Beleuchtungseinrichtung nicht auf die angeführten Ausführungsbeispiele wie Fahrzeugscheinwerfer, Bühnenbeleuchtungen, Straßenbeleuchtungen, Beleuchtungseinrichtungen für Außenanlagen und für öffentliche Plätze wie zB Sportplätze oder Beleuchtungseinrichtungen für Innen- und Außenwände, sondern erstreckt sich auf alle denkbaren Anwendungsmöglichkeiten, wo die Erfindung mit Vorteilen eingesetzt werden kann.

Insbesondere gilt, dass die erfindungsgemäße Leuchtdichteverteilung nicht nur gemäß der Ausführungsbeispiele, sondern auch mit anderen technischen Vorrichtungen, beispielsweise mit Spiegeln und Reflektoren realisiert werden kann, ohne den Kern der Erfindung zu verlassen.

Die Beschreibung der Leuchtdichte- und/oder Lichtstärkeverteilung ist natürlich nicht auf ein sphärisches Koordinatensystem beschränkt und kann genauso in einem kartesischen oder einem anderen Koordinatensystem durchgeführt werden. Dabei werden die jeweiligen Winkel- und Positionsangaben, sowie die Messresultate durch gewöhnliche Koordinatentransformation ineinander übergeführt. Das gleiche gilt ebenso für alle anderen Elemente der Erfindung, die sich auf Positionen- und Winkelangaben beziehen, wie beispielsweise die erfindungsgemäße(n) Hell-/Dunkelgrenzen.

## Patentansprüche

1. Beleuchtungseinrichtung (10) mit mindestens einer Lichtquelle und einer Lichtaustrittsfläche (2), wobei die Beleuchtungseinrichtung (10) ein Lichtleitelement (28) umfasst, welches zwei oder mehr übereinander angeordnete Lichtleiter (30) aufweist, und wobei die in Betrieb befindliche Beleuchtungseinrichtung (10) eine Lichtstärkeverteilung und eine Leuchtdichteverteilung aufweist, wobei bei Messung der Leuchtdichteverteilung und der Lichtstärkeverteilung in einem sphärischen Koordinatensystem, welches einen Polarwinkel (θ) und einen Azimutwinkel (ϕ) aufweist, ein Maximum (3) der Lichtstärkeverteilung auf einer durch den Polarwinkel (θ) von 0° und den Azimutwinkel (ϕ) von 0° gedachten Hauptgeraden (24) durch ein Zentrum (21) der Lichtaustrittsfläche (2) angeordnet ist, und wobei eine vom Maximum (3) der Lichtstärkeverteilung ausgehende Richtung des geringsten Rückgangs der Lichtstärke in einer durch den Polarwinkel (θ) von 0° gedachten Hauptebene (4) angeordnet ist, **dadurch gekennzeichnet, dass** das Lichtleitelement (28) zwischen der Lichtquelle und der Lichtaustrittsfläche (2) angeordnet ist, wobei mittels des Lichtleitelements (28) Lichtstrahlen eines von der Lichtquelle ausgestrahlten Lichtbündels teilweise absorbiert und/oder umgelenkt werden, derart, dass die Leuchtdichte (L) in einer durch einen Azimutwinkel (ϕ) von 0° gedachten Ebene (7) innerhalb eines Polarwinkelbereichs von 4°, vorzugsweise von 3°, um mindestens 90% gegenüber der Leuchtdichte (L₀), die in Richtung des Maximums (3) der Lichtstärkeverteilung auftritt, abnimmt, wobei das Lichtleitelement (28) in Richtung einer Hauptachse (C) langgestreckt ist und eine sich quer zur Längsrichtung erstreckende Lichteintrittsfläche (31) und eine quer zur Längsrichtung abstrahlende Lichtaustrittsfläche (2) aufweist, wobei ein sich in Längsrichtung erstreckender Teilbereich der Wandung der einzelnen Lichtleiter (30) strukturiert und/oder geschwärzt ist.

2. Beleuchtungseinrichtung (10) nach Anspruch 1, **dadurch gekennzeichnet, dass** die Leuchtdichte (L) in einer durch einen Azimutwinkel (ϕ) von 0° gedachten Ebene (7) innerhalb eines Polarwinkelbereichs von 1° um mindestens 60%, vorzugsweise mindestens 70%, gegenüber der Leuchtdichte (L₀), die in Richtung des Maximums (3) der Lichtstärkeverteilung auftritt, abnimmt.

3. Beleuchtungseinrichtung (10) nach Anspruch 1 oder 2, **dadurch gekennzeichnet, dass** die Leuchtdichte (L) in einer durch einen Azimutwinkel (ϕ) von 0° gedachten Ebene (7) innerhalb eines durch die Polarwinkel (θ) von 2° und 5° gegebenen Bereichs auf einen Wert von weniger als 3% der Leuchtdichte (L₀), die in Richtung des Maximums (3) der Lichtstärkeverteilung auftritt, abnimmt.

4. Beleuchtungseinrichtung (10) nach einem der Ansprüche 1 bis 3, **dadurch gekennzeichnet, dass** die Leuchtdichte (L) bezüglich der durch den Azimutwinkel (ϕ) von 0° gedachten Ebene (7) symmetrisch ist.

5. Beleuchtungseinrichtung (10) nach einem der Ansprüche 1 bis 4, **dadurch gekennzeichnet, dass** die Leuchtdichte (L) bezüglich der durch den Polarwinkel (θ) von 0° gedachten Hauptebene (4) asymmetrisch ist, wobei die Leuchtdichte (L), vorzugsweise in einer durch einen Azimutwinkel (ϕ) von 0° gedachten Ebene (7), ausgehend von der durch den Polarwinkel (θ) von 0° gedachten Hauptebene (4) in Richtung der positiven Polarwinkel (θ) stärker abnimmt als in Richtung der negativen Polarwinkel (θ).

6. Beleuchtungseinrichtung (10) nach einem der Ansprüche 1 bis 5, **dadurch gekennzeichnet, dass** die durch den Polarwinkel (θ) von 0° gedachten Hauptebene (4) horizontal ist, oder dass die Horizontalebene (6) in einem Polarwinkelbereich zwischen 0,1° und 2°, vorzugsweise bei etwa 1° angeordnet ist.

7. Beleuchtungseinrichtung (10) nach einem der Ansprüche 1 bis 6, **dadurch gekennzeichnet, dass** die Leuchtdichte (L) in einer durch einen Azimutwinkel (ϕ) zwischen -40° und 40° gedachten Ebene (7, 8) innerhalb eines, vorzugsweise durch die Polarwinkel (θ) von 0° und 3° gegebenen, Polarwinkelbereichs von 3° um mindestens 90% gegenüber der Leuchtdichte (L_{ϕ}), die in Richtung des Polarwinkels (θ) von 0° und des jeweiligen Azimutwinkels (ϕ) auftritt, abnimmt.

8. Beleuchtungseinrichtung (10) nach einem der Ansprüche 1 bis 7, **dadurch gekennzeichnet, dass** die Leuchtdichte (L) in einer durch einen Azimutwinkel (ϕ) zwischen -40° und -10° und zwischen 10° und 40° gedachten Ebene (8) innerhalb eines, vorzugsweise durch die Polarwinkel (θ) von 0° und 1° gegebenen, Polarwinkelbereichs von 1° um mindestens 90% gegenüber der Leuchtdichte (Lϕ), die in Richtung des Polarwinkels (θ) von 0° und des jeweiligen Azimutwinkels (ϕ) auftritt, abnimmt.

9. Beleuchtungseinrichtung (10) nach einem der Ansprüche 1 bis 8, **dadurch gekennzeichnet, dass** die Leuchtdichte (L) und/oder die Lichtstärke (I) in der durch den jeweiligen Azimutwinkel (ϕ) gedachten Ebene (7, 8) in Richtung des Polarwinkels (θ) von 0° Ort ein lokales Maximum aufweist.

10. Beleuchtungseinrichtung (10) nach einem der Ansprüche 1 bis 9, **dadurch gekennzeichnet, dass** die Leuchtdichte (L) in der durch einen Azimutwinkel (ϕ) von 0° gedachten Ebene (7) innerhalb eines durch die Polarwinkel (θ) von 5° und 60° gegebenen Bereichs auf einen Wert von mehr als der Hälfte der Leuchtdichte (L₀), die in Richtung des Maximums (3) der Lichtstärkeverteilung auftritt, zunimmt.

11. Beleuchtungseinrichtung (10) nach einem der Ansprüche 1 bis 10, **dadurch gekennzeichnet, dass** die Leuchtdichte (L) in einer durch einen Azimutwinkel (ϕ) von 5° gedachten Ebene (8) innerhalb eines durch die Polarwinkel (θ) von 5° und 60° gegebenen Bereichs auf einen Wert von mehr als dem Doppelten der Leuchtdichte (L₅), die in Richtung des Polarwinkels (θ) von 0° und dieses Azimutwinkels (ϕ) auftritt, zunimmt.

12. Beleuchtungseinrichtung (10) nach einem der Ansprüche 1 bis 11, **dadurch gekennzeichnet, dass** die Leuchtdichte (L) in einer durch einen Azimutwinkel (ϕ) von 10° gedachten Ebene (8) innerhalb eines durch die Polarwinkel (θ) von 5° und 60° gegebenen Bereichs auf einen Wert von mehr als dem Zehnfachen der Leuchtdichte (L₁₀), die in Richtung des Polarwinkels (θ) von 0° und dieses Azimutwinkels (ϕ) auftritt, zunimmt.

13. Beleuchtungseinrichtung (10) nach einem der Ansprüche 1 bis 12, **dadurch gekennzeichnet, dass** die Leuchtdichte (L) in einer durch einen Azimutwinkel (ϕ) von 20° gedachten Ebene (8) innerhalb eines durch die Polarwinkel (θ) von 5° und 60° gegebenen Bereichs auf einen Wert von mehr als dem 20-fachen der Leuchtdichte (L₂₀), die in Richtung des Polarwinkels (θ) von 0° und dieses Azimutwinkels (ϕ) auftritt, zunimmt.

14. Beleuchtungseinrichtung (10) nach einem der Ansprüche 1 bis 13, **dadurch gekennzeichnet, dass** die Leuchtdichte (L) in Richtung des Maximums (3) der Lichtstärkeverteilung einen Wert von mehr als 1 Mio. cd/m², vorzugsweise mehr als 2 Mio. cd/m² aufweist und bei einem Polarwinkel (θ) von etwa 2° einen Wert von weniger als 10.000 cd/m², vorzugsweise weniger als 4.000 cd/m² aufweist und/oder bei einem Polarwinkel (θ) von 4° einen Wert von weniger als 1.000 cd/m², vorzugsweise weniger als 400 cd/m² aufweist.

## Claims

1. Lighting device (10) comprising at least a light source and a light-emitting surface (2), wherein the lighting device (10) comprises a light-guiding element (28), which comprises two or more light guides (30) arranged one above the other, and wherein the operating lighting device (10) comprises a luminous intensity distribution and a luminance distribution, wherein during measurement of the luminance distribution and the luminous intensity distribution in a spherical coordinate system, which comprises a polar angle (θ) and an azimuth angle (ϕ), a maximum (3) of the luminous intensity distribution is arranged on an imagined main straight line through a center (21) of the light-emitting surface (2) (24) through the polar angle (θ) of 0° and the azimuth angle (ϕ) of 0°, and wherein a direction of the least decline of the luminous intensity starting from the maximum (3) of the luminous intensity distribution is arranged in an imagined main plane (4) through the polar angle (θ) of 0°, **characterized in that** the light-guiding element (28) is arranged between the light source and the light-emitting surface (2), wherein by means of the light-guiding element (28) rays of light of a light bundle emitted from the light source are partially absorbed and/or redirected, in such a manner that the luminance (L) decreases by at least 90% in an imagined plane (7) through an azimuth angle (ϕ) of 0° within a polar angular range of 4°, preferably 3°, compared to the luminance (L₀), which appears in direction of the maximum (3) of the luminous intensity distribution, wherein the light-guiding element (28) is elongated in the direction of a main axis (C) and comprises a light ingress surface (31) extending transversely to the longitudinal direction and a light-emitting surface (2) emitting transversely to the longitudinal direction, wherein a longitudinally extending subregion of the wall of the individual light guides (30) is structured and/or blackened.

2. Lighting device (10) according to claim 1, **characterized in that** the luminance (L) decreases by at least 60%, preferably at least 70%, in an imagined plane (7) through an azimuth angle (ϕ) of 0° within a polar angular range of 1° compared to the luminance (L₀), which appears in direction of the maximum (3) of the luminous intensity distribution.

3. Lighting device (10) according to claim 1 or 2, **characterized in that** the luminance (L) decreases to a value lower than 3% of the luminance (L₀) in an imagined plane (7) through an azimuth angle (ϕ) of 0° within a range given by the polar angle (θ) of 2° and 5°, which appears in direction of the maximum (3) of the luminous intensity distribution.

4. Lighting device (10) according to any one of claims 1 to 3, **characterized in that** the luminance (L) is symmetrical with respect to the imagined plane (7) through the azimuth angle (ϕ) of 0°.

5. Lighting device (10) according to any one of claims 1 to 4, **characterized in that** the luminance (L) is asymmetrical with respect to the imagined main plane (4) through the polar angle (θ) of 0°, wherein the luminance (L), preferably in an imagined plane (7) through an azimuth angle (ϕ) of 0°, starting from the imagined main plane (4) through the polar angle (θ) of 0° decreases stronger in direction of the positive polar angles (θ) than in direction of the negative polar angles (θ).

6. Lighting device (10) according to any one of claims 1 to 5, **characterized in that** the imagined main plane (4) through the polar angle (θ) of 0° is horizontal, or that the horizontal plane (6) is arranged in a polar angular range between 0.1° and 2°, preferably at about 1°.

7. Lighting device (10) according to any one of claims 1 to 6, **characterized in that** the luminance (L) decreases by at least 90% in an imagined plane (7, 8) through an azimuth angle (ϕ) between -40° and 40° within a polar angular range of 3°, preferably through the given polar angle (θ) of 0° and 3°, compared to the luminance (Lϕ), which appears in direction of the polar angle (θϕ) of 0° and the respective azimuth angle (ϕ).

8. Lighting device (10) according to any one of claims 1 to 7, **characterized in that** the luminance (L) decreases by at least 90% in an imagined plane (8) through an azimuth angle (ϕ) between -40° and -10° and between 10° and 40° within a polar angular range of 1°, preferably through the given polar angle (θ) of 0° and 1°, compared to the luminance (Lϕ), which appears in direction of the polar angle (θ) of 0° and the respective azimuth angle (ϕ).

9. Lighting device (10) according to any one of claims 1 to 8, **characterized in that** the luminance (L) and/or the luminous intensity (I) comprises a local maximum in the imagined plane (7, 8) through the respective azimuth angle (ϕ) in direction of the polar angle (θ) of 0°.

10. Lighting device (10) according to any one of claims 1 to 9, **characterized in that** the luminance (L) in the imagined plane (7) through an azimuth angle (ϕ) of 0° within a range given by the polar angle (θ) of 5° and 60° increases to a value more than half of the luminance (L₀), which appears in direction of the maximum (3) of the luminous intensity distribution.

11. Lighting device (10) according to any one of claims 1 to 10, **characterized in that** the luminance (L) in an imagined plane (8) through an azimuth angle (ϕ) of 5° within a range given by the polar angle (θ) of 5° and 60° increases to a value of more than twice the luminance (L₅), which appears in direction of the polar angle (θ) of 0° and this azimuth angle (ϕ).

12. Lighting device (10) according to any one of claims 1 to 11, **characterized in that** the luminance (L) in an imagined plane (8) through an azimuth angle (ϕ) of 10° within a range given by the polar angle (θ) of 5° and 60° increases to a value of more than ten times the luminance (L₁₀), which appears in direction of the polar angle (θ) of 0° and this azimuth angle (ϕ).

13. Lighting device (10) according to any one of claims 1 to 12, **characterized in that** the luminance (L) in an imagined plane (8) through an azimuth angle (ϕ) of 20° within a range given by the polar angle (θ) of 5° and 60° increases to a value of more than twenty times the luminance (L₂₀), which appears in direction of the polar angle (θ) of 0° and this azimuth angle (ϕ).

14. Lighting device (10) according to any one of claims 1 to 13, **characterized in that** the luminance (L) in direction of the maximum (3) of the luminous intensity distribution comprises a value of more than 1 Mio cd/m², preferably more than 2 Mio cd/m² and comprises a value lower than 10,000 cd/m², preferably lower than 4,000 cd/m² at a polar angle (θ) of about 2° and/or comprises a value lower than 1,000 cd/m², preferably lower than 400 cd/m² at a polar angle (θ) of 4°.

## Revendications

1. Dispositif d'éclairage (10) comportant au moins une source de lumière et une surface de sortie de lumière (2), dans lequel le dispositif d'éclairage (10) comporte un élément de guide de lumière (28) qui présente deux ou plusieurs guides de lumière (30) superposés et dans lequel le dispositif d'éclairage (10) en fonctionnement présente une distribution d'intensité lumineuse et une distribution de luminance, dans lequel, pendant la mesure de la distribution de luminance et de la distribution d'intensité lumineuse dans un système de coordonnées sphériques, qui présente un angle polaire (*θ*) et un angle azimutal (*ϕ*), un maximum (3) de la distribution d'intensité lumineuse est disposé sur une ligne droite principale imaginaire (24) traversant l'ange polaire (*θ*) de 0° et l'angle azimutal (*ϕ*) de 0° traversant le centre (21) de la surface de sortie de lumière (2), et dans lequel une direction de la plus faible décroissance de d'intensité lumineuse, sortant du maximum (3) de la distribution d'intensité lumineuse, est disposée dans un plan principal (4) imaginaire traversant l'angle polaire (*θ*) de 0°, **caractérisé en ce que** l'élément de guide de lumière (28) est disposé entre la source de lumière et la surface de sortie de lumière (2), dans lequel des rayons de lumière d'un faisceau lumineux rayonné par la source de lumière sont absorbés et/ou déviés partiellement au moyen de l'élément de guide de lumière (28) de sorte que la luminance (L) diminue dans un plan imaginaire (7) traversant un angle azimutal (*ϕ*) de 0° dans une région d'angle polaire de 4°, préférablement de 3°, d'au moins 90% par rapport à la luminance (*L*₀) qui se produit dans la direction du maximum (3) de la distribution d'intensité lumineuse, dans lequel l'élément de guide lumière (28) est allongé dans une direction d'un axe principal (C) et présente une surface d'entrée de lumière (31) s'étendant transversalement à la direction longitudinale et une surface de sortie de lumière (2) rayonnant transversalement à la direction longitudinale, dans lequel une région partielle de la paroi de chacun des guides de lumière (30) est structurée et/ou noircie.

2. Dispositif d'éclairage (10) selon la revendication 1, **caractérisé en ce que** la luminance (L) diminue dans un plan imaginaire (7) traversant un angle azimutal (*ϕ*) de 0° dans une région d'angle polaire de 1° d'au moins 60%, préférablement d'au moins 70%, par rapport à la luminance (*L*₀) qui se produit dans la direction du maximum (3) de la distribution d'intensité lumineuse.

3. Dispositif d'éclairage (10) selon la revendication 1 ou 2, **caractérisé en ce que** la luminance (L) diminue dans un plan imaginaire (7) traversant un angle azimutal (*ϕ*) de 0° dans une région donnée par les angles polaires (*θ*) de 2° et 5° jusqu'à une valeur inférieure à 3% de la luminance (*L*₀) qui se produit dans la direction du maximum (3) de la distribution d'intensité lumineuse.

4. Dispositif d'éclairage (10) selon l'une des revendications 1 à 3, **caractérisé en ce que** la luminance (L) est symétrique par rapport au plan imaginaire (7) traversant l'angle azimutal (*ϕ*) de 0°.

5. Dispositif d'éclairage (10) selon l'une des revendications 1 à 4, **caractérisé en ce que** la luminance (L) est asymétrique par rapport au plan principal imaginaire (4) traversant l'angle polaire (*θ*) de 0°, dans lequel la luminance (L), préférablement dans un plan imaginaire (7) traversant l'angle azimutal (*ϕ*) de 0°, sortant du plan imaginaire principal (4) traversant l'angle polaire (*θ*) de 0°diminue plus fortement dans la direction des angles polaires positifs (*θ*) que la direction des angles polaires négatifs (*θ*).

6. Dispositif d'éclairage (10) selon l'une des revendications 1 à 5, **caractérisé en ce que** le plan imaginaire principal (4) traversant l'angle polaire (*θ*) de 0° est horizontal, ou que le plan horizontal (6) est disposé dans une région d'angle polaire entre 0,1° et 2°, préférablement à environ 1°.

7. Dispositif d'éclairage (10) selon l'une des revendications 1 à 6, **caractérisé en ce que** luminance (L) diminue dans un plan imaginaire (7, 8) traversant un angle azimutal (*ϕ*) entre -40° et 40° dans une région d'angle polaire donnée de 3°, préférablement traversant les angles polaires (*θ*) de 0° et 3°, d'au moins 90% par rapport à la luminance (*L_{ϕ}*), qui se produit dans la direction de l'angle polaire (*θ*) de 0° et de l'angle azimutal respectif (*ϕ*).

8. Dispositif d'éclairage (10) selon l'une des revendications 1 à 7, **caractérisé en ce que** la luminance (L) diminue dans un plan imaginaire (8) traversant un angle azimutal (*ϕ*) entre -40° et -10° et entre 10° et 40° dans une région d'angle polaire donnée d'1°, préférablement traversant les angles polaires (*θ*) de 0° et 1°, d'au moins 90% par rapport à la luminance (*L_{ϕ}*), qui se produit dans la direction de l'angle polaire (*θ*) de 0° et de l'angle azimutal respectif (*ϕ*).

9. Dispositif d'éclairage (10) selon l'une des revendications 1 à 8, **caractérisé en ce que** la luminance (L) et/ou l'intensité lumineuse (I) présente un maximum local dans le plan imaginaire (7, 8) traversant l'angle azimutal respectif (*ϕ*) dans la direction de l'angle polaire (*ϕ*) de 0°.

10. Dispositif d'éclairage (10) selon l'une des revendications 1 à 9, **caractérisé en ce que** la luminance (L) augmente dans le plan imaginaire (7) traversant un angle azimutal (*ϕ*) de 0° dans une région donnée traversant les angles polaires (*θ*) de 5° et 60° jusqu'à une valeur supérieure à la moitié de la luminance (*L*₀), qui se produit dans la direction du maximum (3) de la distribution d'intensité lumineuse.

11. Dispositif d'éclairage (10) selon l'une des revendications 1 à 10, **caractérisé en ce que** la luminance (L) augmente dans un plan imaginaire (8) traversant un angle azimutal (*ϕ*) de 5° dans une région donnée traversant les angles polaires (*θ*) de 5° et 60° jusqu'à une valeur supérieure au double de la luminance (*L*₅), qui se produit dans la direction de l'angle polaire (*θ*) de 0° et de cet angle azimutal (*ϕ*).

12. Dispositif d'éclairage (10) selon l'une des revendications 1 à 11, **caractérisé en ce que** la luminance (L) augmente dans un plan imaginaire (8) traversant un angle azimutal (*ϕ*) de 10° dans une région donnée traversant les angles polaires (*θ*) de 5° et 60° jusqu'à une valeur supérieure à dix fois la valeur de la luminance (*L*₁₀), qui se produit dans la direction de l'angle polaire (*θ*) de 0° et de cet angle azimutal (*ϕ*).

13. Dispositif d'éclairage (10) selon l'une des revendications 1 à 12, **caractérisé en ce que** la luminance (L) augmente dans un plan imaginaire (8) traversant un angle azimutal (*ϕ*) de 20° dans une région donnée traversant les angles polaires (*θ*) de 5° et 60° jusqu'à une valeur supérieure à vingt fois la valeur de la luminance (*L*₂₀), qui se produit dans la direction de l'angle polaire (*θ*) de 0° et de cet angle azimutal (*ϕ*).

14. Dispositif d'éclairage (10) selon l'une des revendications 1 à 13, **caractérisé en ce que** la luminance (L) a une valeur dans la direction du maximum (3) de la distribution d'intensité lumineuse supérieure à 1 Mio. cd/m², préférablement supérieure à 2 Mio. cd/m² et, à un angle polaire (*θ*) d'environ 2°, une valeur inférieure à 10.000 cd/m², préférablement inférieure à 4.000 cd/m², et/ou présente à un angle polaire (*θ*) d'environ 4° une valeur inférieure à 1.000 cd/m², préférablement inférieure à 400 cd/m².
